# EUROPEAN PATENT APPLICATION

(11) **EP 4 287 574 A1**
(43) Date of publication of application: **06.12.2023**
(21) Application number: 22745105.1
(22) Date of filing: 19.01.2022
(51) Int. Cl.: H04L 41/16, H04L 41/084

(54) **MODEL UPDATE METHOD AND APPARATUS IN COMMUNICATION SYSTEM, AND STORAGE MEDIUM**

(30) Priority: 01.02.2021 CN 202110138849
(71) Applicant: Datang Mobile Communications Equipment Co., Ltd., Beijing 100085 (CN)
(72) Inventor: SUO, Shiqiang, Beijing 100085 (CN); YANG, Xianjun, Beijing 100085 (CN)
(74) Representative: Studio Torta S.p.A.
(86) International application number: PCT/CN2022/072837
(87) International publication number: WO 2022/161230

(57) **Abstract**

The present application provides a model update method and apparatus in a communication system, and a storage medium. On a side of an access network device, the method includes: determining that a communication environment changes, and finding, according to a first mapping relationship set, a machine learning model suitable for a current communication environment from a plurality of machine learning models associated with the first mapping relationship set, to form a first machine learning model set; and deploying the machine learning model of the first machine learning model set on the access network device, and/or transmitting first information to a terminal, where the first information is used to instruct the terminal to deploy the machine learning model of the first machine learning model set. According to the present application, the update efficiency and effect of machine learning models in a communication system are improved, thereby improving the performance of the communication system.

## Description

This application claims priority to Chinese Patent Application No. 202110138849.5, filed with the China National Intellectual Property Administration on February 1, 2021 and entitled "MODEL UPDATE METHOD AND APPARATUS IN COMMUNICATION SYSTEM, AND STORAGE MEDIUM", which is incorporated herein by reference in its entirety.

### TECHNICAL FIELD

The present application relates to the field of communications and, in particular, to a model update method and apparatus in a communication system, and a storage medium.

### BACKGROUND

In communication systems, machine learning models can be applied to channel estimation, channel prediction, channel state information feedback and the like, it can be seen that the model performance of the machine learning models affects the performance of the communication systems.

A machine learning model is typically learnt from a large amount of training data. Since a communication environment is prone to change, the original machine learning model has general performance in the changed communication environment, and thus it is necessary to obtain training data in the changed communication environment and retrain the machine learning model.

The manner in which a machine learning model is retrained multiple times is inefficient and cannot be applied to a communication system having high requirements for promptness. Therefore, how to improve update efficiency and effect of the machine learning model in the communication system has become an urgent problem to be solved.

### SUMMARY

The present application provides a model update method and apparatus in a communication system and provides a storage medium, which is intended to solve the problem regarding how to improve the update efficiency and effect of machine learning models in a communication system.

In a first aspect, the present application provides a model update method in a communication system, applied to an access network device, where the access network device is configured with a first mapping relationship set and a plurality of machine learning models associated with the first mapping relationship set, the first mapping relationship set includes mapping relationships between plural pieces of communication environment information and the plurality of machine learning models, the method includes:
determining that a communication environment changes, and finding, according to the first mapping relationship set, a machine learning model suitable for a current communication environment from the plurality of machine learning models, to form a first machine learning model set; and
deploying the machine learning model of the first machine learning model set on the access network device, and/or transmitting first information to a terminal, where the first information is used to instruct the terminal to deploy the machine learning model of the first machine learning model set.

Optionally, the method further includes:
acquiring communication environment information on a side of the access network device and communication environment information on a side of the terminal;
where the finding, according to the first mapping relationship set, the machine learning model suitable for the current communication environment from the plurality of machine learning models, to form the first machine learning model set includes:
   finding, according to the first mapping relationship set, the communication environment information on the side of the access network device and the communication environment information on the side of the terminal, the machine learning model from the plurality of machine learning models, to form the first machine learning model set.

Optionally, the acquiring the communication environment information on the side of the terminal includes:
receiving second information transmitted by the terminal, where the second information includes the communication environment information on the side of the terminal; or
receiving third information transmitted by the terminal, and acquiring the second information in response to the third information, where the third information is used to instruct the access network device to acquire the second information.

Optionally, the method further includes:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the method further includes:
receiving fourth information transmitted by the terminal, where if the fourth information indicates that a communication environment on a side of the terminal changes, the fourth information includes communication environment information on the side of the terminal and/or identification information of a machine learning model requested by the terminal;
determining, according to the fourth information, whether the communication environment changes; and
if the communication environment changes, finding, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

Optionally, the method further includes:
when the terminal performs cell switching, determining that the communication environment changes.

Optionally, the method further includes:
receiving fifth information transmitted by a source access network device of the terminal;
where the fifth information includes a second mapping relationship set, communication environment information when the terminal communicates with the source access network device, and/or identification information of a machine learning model adopted when the terminal communicates with another access network device, the second mapping relationship set is a subset of mapping relationship associated with the terminal in mapping relationship between plural pieces of communication environment information configured on the source access network device and the plurality of machine learning models;
updating the first mapping relationship set according to the fifth information;
if the access network device is not configured with all or part of machine learning models associated with the second mapping relationship set, receiving all or part of the machine learning models, transmitted by the source access network device, associated with the second mapping relationship set; and
determining, according to all or part of the machine learning models associated with the second mapping relationship set that are received and the plurality of machine learning models associated with the first mapping relationship set before the updating, a plurality of machine learning models associated with the updated first mapping relationship set;
where the finding, according to the first mapping relationship set, the machine learning model suitable for the current communication environment from the plurality of machine learning models, to form the first machine learning model set includes:
   finding, according to the updated first mapping relationship set, the machine learning model suitable for the current communication environment from the plurality of machine learning models associated with the updated first mapping relationship set, to form the first machine learning model set.

Optionally, the method further includes:
if a message transmitted by the terminal indicating an RRC connection establishment or a message transmitted by the terminal indicating an RRC connection re-establishment is received, determining that the communication environment changes.

In a second aspect, the present application provides a model update method in a communication system, applied to a core network device, where the core network device is preconfigured with a third mapping relationship set and a plurality of machine learning models associated with the third mapping relationship set, the third mapping relationship set includes mapping relationships between plural pieces of communication environment information and the plurality of machine learning models, the method includes:
determining that a communication environment changes, and finding, according to the third mapping relationship set, a machine learning model suitable for a current communication environment from the plurality of machine learning models, to form a second machine learning model set; and
transmitting sixth information including the second machine learning model set to an access network device, where the sixth information is used to instruct the access network device to deploy the machine learning model of the second machine learning model set, and/or to instruct the access network device to transmit seventh information to a terminal, where the seventh information is used to instruct the terminal to deploy the machine learning model of the second machine learning model set.

Optionally, the method further includes:
acquiring communication environment information on a side of the access network device and communication environment information on a side of the terminal;
where the finding, according to the third mapping relationship set, the machine learning model suitable for the current communication environment from the plurality of machine learning models, to form the second machine learning model set includes:
   finding, according to the third mapping relationship set, the communication environment information on the side of the access network device and the communication environment information on the side of the terminal, the machine learning model from the plurality of machine learning models, to form the second machine learning model set.

Optionally, the acquiring the communication environment information on the side of the access network device and the communication environment information on the side of the terminal includes:
receiving eighth information transmitted by the access network device, where the eighth information includes the communication environment information on the side of the access network device and the communication environment information on the side of the terminal.

Optionally, the method further includes:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the method further includes:
receiving ninth information transmitted by the access network device;
where the ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device;
where the determining that the communication environment changes, and the finding, according to the third mapping relationship set, the machine learning model suitable for the current communication environment from the plurality of machine learning models, to form the second machine learning model set includes:
   determining, according to the ninth information, that the communication environment changes; and
   finding, according to the third mapping relationship set and the ninth information, the machine learning model from the plurality of machine learning models, to form the second machine learning model set.

Optionally, the method further includes:
receiving first mapping relationship sets transmitted by a plurality of access network devices and a plurality of machine learning models associated with the first mapping relationship sets; and
establishing or updating, according to the first mapping relationship sets transmitted by the plurality of access network devices and the plurality of machine learning models associated with the first mapping relationship sets, the third mapping relationship set and the plurality of machine learning models associated with the third mapping relationship set.

In a third aspect, the present application provides a model update method in a communication system, applied to a terminal. The method includes:
receiving first information or seventh information returned by an access network device, where the first information is used to instruct the terminal to deploy a machine learning model of a first machine learning model set, and the seventh information is used to instruct the terminal to deploy a machine learning model of a second machine learning model set; and
deploying the machine learning model of the first machine learning model set according to the first information, or, deploying the machine learning model of the second machine learning model set according to the seventh information.

Optionally, before the receiving the first information or the seventh information returned by the access network device, the method further includes:
transmitting second information to the access network device, where the second information includes communication environment information on a side of the terminal; or
transmitting third information to the access network device, where the third information is used to instruct the access network device to acquire the second information.

Optionally, the method further includes:
determining whether a communication environment on a side of the terminal changes; and
transmitting fourth information to the access network device according to whether the communication environment on the side of the terminal changes, where if the fourth information indicates that the communication environment on the side of the terminal changes, the fourth information includes communication environment information on the side of the terminal and/or identification information of a machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, and where the transmitting the fourth information to the access network device according to whether the communication environment on the side of the terminal changes includes:
if it is determined that the communication environment on the side of the terminal changes, determining from the fourth mapping relationship set, according to the communication environment information on the side of the terminal, the identification information of the machine learning model requested by the terminal; and
transmitting the fourth information to the access network device, where the fourth information includes the identification information of the machine learning model requested by the terminal.

In a fourth aspect, the present application provides a model update apparatus in a communication system, applied to an access network device, where the access network device is configured with a first mapping relationship set and a plurality of machine learning models associated with the first mapping relationship set, the first mapping relationship set includes mapping relationships between plural pieces of communication environment information and the plurality of machine learning models, the apparatus includes: a memory, a transceiver and a processor;
where the memory is configured to store a computer program;
the transceiver is configured to transceive data under control of the processor;
the processor is configured to read the computer program in the memory and execute operations of:
   determining that a communication environment changes, and finding, according to the first mapping relationship set, a machine learning model suitable for a current communication environment from the plurality of machine learning models, to form a first machine learning model set; and
   deploying the machine learning model of the first machine learning model set on the access network device, and/or transmitting first information to a terminal, where the first information is used to instruct the terminal to deploy the machine learning model of the first machine learning model set.

Optionally, the processor is further configured to execute an operation of:
acquiring communication environment information on a side of the access network device and communication environment information on a side of the terminal;
where the finding, according to the first mapping relationship set, the machine learning model suitable for the current communication environment from the plurality of machine learning models, to form the first machine learning model set includes:
   finding, according to the first mapping relationship set, the communication environment information on the side of the access network device and the communication environment information on the side of the terminal, the machine learning model from the plurality of machine learning models, to form the first machine learning model set.

Optionally, the acquiring the communication environment information on the side of the terminal includes:
receiving second information transmitted by the terminal, where the second information includes the communication environment information on the side of the terminal; or
receiving third information transmitted by the terminal, and acquiring the second information in response to the third information, where the third information is used to instruct the access network device to acquire the second information.

Optionally, the processor is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the processor is further configured to execute operations of:
receiving fourth information transmitted by the terminal, where if the fourth information indicates that a communication environment on a side of the terminal changes, the fourth information includes communication environment information on the side of the terminal and/or identification information of a machine learning model requested by the terminal;
determining, according to the fourth information, whether the communication environment changes; and
if the communication environment changes, finding, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

Optionally, the processor is further configured to execute an operation of:
when the terminal performs cell switching, determining that the communication environment changes.

Optionally, the processor is further configured to execute operations of:
receiving fifth information transmitted by a source access network device of the terminal;
where the fifth information includes a second mapping relationship set, communication environment information when the terminal communicates with the source access network device, and/or identification information of a machine learning model adopted when the terminal communicates with another access network device, the second mapping relationship set is a subset of mapping relationship associated with the terminal in mapping relationship between plural pieces of communication environment information configured on the source access network device and the plurality of machine learning models;
updating the first mapping relationship set according to the fifth information;
if the access network device is not configured with all or part of machine learning models associated with the second mapping relationship set, receiving all or part of the machine learning models, transmitted by the source access network device, associated with the second mapping relationship set; and
determining, according to all or part of the machine learning models associated with the second mapping relationship set that are received and the plurality of machine learning models associated with the first mapping relationship set before the updating, a plurality of machine learning models associated with the updated first mapping relationship set;
where the finding, according to the first mapping relationship set, the machine learning model suitable for the current communication environment from the plurality of machine learning models, to form the first machine learning model set includes:
   finding, according to the updated first mapping relationship set, the machine learning model suitable for the current communication environment from the plurality of machine learning models associated with the updated first mapping relationship set, to form the first machine learning model set.

Optionally, the receiving the second information transmitted by the terminal includes:
if a message transmitted by the terminal indicating an RRC connection establishment or a message transmitted by the terminal indicating an RRC connection re-establishment is received, determining that the communication environment changes.

In a fifth aspect, the present application provides a model update apparatus in a communication system, applied to a core network device, where the core network device is preconfigured with a third mapping relationship set and a plurality of machine learning models associated with the third mapping relationship set, the third mapping relationship set includes mapping relationships between plural pieces of communication environment information and the plurality of machine learning models, the apparatus includes: a memory, a transceiver and a processor;
where the memory is configured to store a computer program;
the transceiver is configured to transceive data under control of the processor;
the processor is configured to read the computer program in the memory and execute operations of:
   determining that a communication environment changes, and finding, according to the third mapping relationship set, a machine learning model suitable for a current communication environment from the plurality of machine learning models, to form a second machine learning model set; and
   transmitting sixth information including the second machine learning model set to an access network device, where the sixth information is used to instruct the access network device to deploy the machine learning model of the second machine learning model set, and/or to instruct the access network device to transmit seventh information to a terminal, where the seventh information is used to instruct the terminal to deploy the machine learning model of the second machine learning model set.

Optionally, the processor is further configured to execute an operation of:
acquiring communication environment information on a side of the access network device and communication environment information on a side of the terminal;
where the finding, according to the third mapping relationship set, the machine learning model suitable for the current communication environment from the plurality of machine learning models, to form the second machine learning model set includes:
   finding, according to the third mapping relationship set, the communication environment information on the side of the access network device and the communication environment information on the side of the terminal, the machine learning model from the plurality of machine learning models, to form the second machine learning model set.

Optionally, the acquiring the communication environment information on the side of the access network device and the communication environment information on the side of the terminal includes:
receiving eighth information transmitted by the access network device, where the eighth information includes the communication environment information on the side of the access network device and the communication environment information on the side of the terminal.

Optionally, the processor is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the processor is further configured to execute an operation of:
receiving ninth information transmitted by the access network device;
where the ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device;
where the determining that the communication environment changes, and the finding, according to the third mapping relationship set, the machine learning model suitable for the current communication environment from the plurality of machine learning models, to form the second machine learning model set includes:
   determining, according to the ninth information, that the communication environment changes; and
   finding, according to the third mapping relationship set and the ninth information, the machine learning model from the plurality of machine learning models, to form the second machine learning model set.

Optionally, the processor is further configured to execute operations of:
receiving first mapping relationship sets transmitted by a plurality of access network devices and a plurality of machine learning models associated with the first mapping relationship sets; and
establishing or updating, according to the first mapping relationship sets transmitted by the plurality of access network devices and the plurality of machine learning models associated with the first mapping relationship sets, the third mapping relationship set and the plurality of machine learning models associated with the third mapping relationship set.

In a sixth aspect, the present application provides a model update apparatus in a communication system, applied to a terminal. The apparatus includes: a memory, a transceiver and a processor;
where the memory is configured to store a computer program;
the transceiver is configured to transceive data under control of the processor;
the processor is configured to read the computer program in the memory and execute operations of:
   receiving first information or seventh information returned by an access network device, where the first information is used to instruct the terminal to deploy a machine learning model of a first machine learning model set, and the seventh information is used to instruct the terminal to deploy a machine learning model of a second machine learning model set; and
   deploying the machine learning model of the first machine learning model set according to the first information, or, deploying the machine learning model of the second machine learning model set according to the seventh information.

Optionally, before the receiving the first information or the seventh information returned by the access network device, the processor is further configured to execute an operation of:
transmitting second information to the access network device, where the second information includes communication environment information on a side of the terminal; or
transmitting third information to the access network device, where the third information is used to instruct the access network device to acquire the second information.

Optionally, the processor is further configured to execute operations of:
determining whether a communication environment on a side of the terminal changes; and
transmitting fourth information to the access network device according to whether the communication environment on the side of the terminal changes, where if the fourth information indicates that the communication environment on the side of the terminal changes, the fourth information includes communication environment information on the side of the terminal and/or identification information of a machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, and where the transmitting the fourth information to the access network device according to whether the communication environment on the side of the terminal changes includes:
if it is determined that the communication environment on the side of the terminal changes, determining from the fourth mapping relationship set, according to the communication environment information on the side of the terminal, the identification information of the machine learning model requested by the terminal; and
transmitting the fourth information to the access network device, where the fourth information includes the identification information of the machine learning model requested by the terminal.

In a seventh aspect, the present application provides a model update apparatus in a communication system, applied to an access network device, where the access network device is configured with a first mapping relationship set and a plurality of machine learning models associated with the first mapping relationship set, the first mapping relationship set includes mapping relationships between plural pieces of communication environment information and the plurality of machine learning models, the apparatus includes:
a finding unit, configured to determine that a communication environment changes, and find, according to the first mapping relationship set, a machine learning model suitable for a current communication environment from the plurality of machine learning models, to form a first machine learning model set; and
a deploying unit, configured to deploy the machine learning model of the first machine learning model set on the access network device, and/or a transmitting unit, configured to transmit first information to a terminal, where the first information is used to instruct the terminal to deploy the machine learning model of the first machine learning model set.

Optionally, the apparatus further includes:
an acquiring unit, configured to acquire communication environment information on a side of the access network device and communication environment information on a side of the terminal;
where the finding unit is specifically configured to:
   find, according to the first mapping relationship set, the communication environment information on the side of the access network device and the communication environment information on the side of the terminal, the machine learning model from the plurality of machine learning models, to form the first machine learning model set.

Optionally, the apparatus further includes a first receiving unit configured to:
receive second information transmitted by the terminal, where the second information includes the communication environment information on the side of the terminal; or receive third information transmitted by the terminal, and acquire the second information in response to the third information, where the third information is used to instruct the access network device to acquire the second information.

Optionally, the apparatus further includes a first determining unit configured to:
determine, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determine, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the apparatus further includes:
a second receiving unit, configured to receive fourth information transmitted by the terminal, where if the fourth information indicates that a communication environment on a side of the terminal changes, the fourth information includes communication environment information on the side of the terminal and/or identification information of a machine learning model requested by the terminal; and
a second determining unit, configured to determine, according to the fourth information, whether the communication environment changes;
where the finding unit is specifically configured to: if the communication environment changes, find, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

Optionally, the apparatus further includes:
a third determining unit configured to, when the terminal performs cell switching, determine that the communication environment changes.

Optionally, the apparatus further includes:
a third receiving unit configured to receive fifth information transmitted by a source access network device of the terminal;
where the fifth information includes a second mapping relationship set, communication environment information when the terminal communicates with the source access network device, and/or identification information of a machine learning model adopted when the terminal communicates with another access network device, the second mapping relationship set is a subset of mapping relationship associated with the terminal in mapping relationship between plural pieces of communication environment information configured on the source access network device and the plurality of machine learning models;
a first updating unit configured to update the first mapping relationship set according to the fifth information;
a fourth receiving unit configured to, if the access network device is not configured with all or part of machine learning models associated with the second mapping relationship set, receive all or part of the machine learning models, transmitted by the source access network device, associated with the second mapping relationship set; and
a second updating unit configured to determine, according to all or part of the machine learning models associated with the second mapping relationship set that are received and the plurality of machine learning models associated with the first mapping relationship set before the updating, a plurality of machine learning models associated with the updated first mapping relationship set;
where the finding unit is specifically configured to:
   find, according to the updated first mapping relationship set, the machine learning model suitable for the current communication environment from the plurality of machine learning models associated with the updated first mapping relationship set, to form the first machine learning model set.

Optionally, the apparatus further includes a fourth determining unit configured to:
if a message transmitted by the terminal indicating an RRC connection establishment or a message transmitted by the terminal indicating an RRC connection re-establishment is received, determine that the communication environment changes.

In an eighth aspect, the present application provides a model update apparatus in a communication system, applied to a core network device, where the core network device is preconfigured with a third mapping relationship set and a plurality of machine learning models associated with the third mapping relationship set, the third mapping relationship set includes mapping relationships between plural pieces of communication environment information and the plurality of machine learning models, the apparatus includes:
a finding unit, configured to determine that a communication environment changes, and find, according to the third mapping relationship set, a machine learning model suitable for a current communication environment from the plurality of machine learning models, to form a second machine learning model set; and
a transmitting unit, configured to transmit sixth information including the second machine learning model set to an access network device, where the sixth information is used to instruct the access network device to deploy the machine learning model of the second machine learning model set, and/or to instruct the access network device to transmit seventh information to a terminal, where the seventh information is used to instruct the terminal to deploy the machine learning model of the second machine learning model set.

Optionally, the apparatus further includes:
an acquiring unit, configured to acquire communication environment information on a side of the access network device and communication environment information on a side of the terminal;
where the finding unit is specifically configured to:
   find, according to the third mapping relationship set, the communication environment information on the side of the access network device and the communication environment information on the side of the terminal, the machine learning model from the plurality of machine learning models, to form the second machine learning model set.

Optionally, the apparatus further includes:
a first receiving unit, configured to receive eighth information transmitted by the access network device, where the eighth information includes the communication environment information on the side of the access network device and the communication environment information on the side of the terminal.

Optionally, the apparatus further includes a determining unit configured to:
determine, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determine, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the apparatus further includes:
a second receiving unit, configured to receive ninth information transmitted by the access network device;
where the ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device;
where the finding unit is specifically configured to:
   determine, according to the ninth information, that the communication environment changes; and
   find, according to the third mapping relationship set and the ninth information, the machine learning model from the plurality of machine learning models, to form the second machine learning model set.

Optionally, the apparatus further includes:
a third receiving unit, configured to receive first mapping relationship sets transmitted by a plurality of access network devices and a plurality of machine learning models associated with the first mapping relationship sets; and
a model processing unit, configured to establish or update, according to the first mapping relationship sets transmitted by the plurality of access network devices and the plurality of machine learning models associated with the first mapping relationship sets, the third mapping relationship set and the plurality of machine learning models associated with the third mapping relationship set.

In a ninth aspect, the present application provides a model update apparatus in a communication system, applied to a terminal. The apparatus includes:
a receiving unit, configured to receive first information or seventh information returned by an access network device, where the first information is used to instruct the terminal to deploy a machine learning model of a first machine learning model set, and the seventh information is used to instruct the terminal to deploy a machine learning model of a second machine learning model set; and
a deploying unit, configured to deploy the machine learning model of the first machine learning model set according to the first information, or, deploy the machine learning model of the second machine learning model set according to the seventh information.

Optionally, the apparatus further includes a first transmitting unit configured to:
transmit second information to the access network device, where the second information includes communication environment information on a side of the terminal; or
transmit third information to the access network device, where the third information is used to instruct the access network device to acquire the second information.

Optionally, the apparatus further includes:
a determining unit, configured to determine whether a communication environment on a side of the terminal changes; and
a second transmitting unit, configured to transmit fourth information to the access network device according to whether the communication environment on the side of the terminal changes, where if the fourth information indicates that the communication environment on the side of the terminal changes, the fourth information includes communication environment information on the side of the terminal and/or identification information of a machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, and where the second transmitting unit is specifically configured to:
if it is determined that the communication environment on the side of the terminal changes, determine from the fourth mapping relationship set, according to the communication environment information on the side of the terminal, the identification information of the machine learning model requested by the terminal; and
transmit the fourth information to the access network device, where the fourth information includes the identification information of the machine learning model requested by the terminal.

In a tenth aspect, the present application provides a processor-readable storage medium in which a computer program is stored, where the computer program is configured to enable the processor to execute the method according to the first aspect, the second aspect or the third aspect.

In an eleventh aspect, the present application provides a computer program product including instructions. The instructions, when running on a computer, enable the computer to execute the method described above according to the first aspect, the second aspect or the third aspect.

In a twelfth aspect, the present application provides a communication system including the terminal, the access network device and the core network device as described above in any item.

The present application provides a model update method and apparatus in a communication system and provides a storage medium, where an access network device, when determining that a communication environment changes, finds, according to a first mapping relationship set, a machine learning model suitable for a current communication environment from a plurality of machine learning models associated with the first mapping relationship set, to form a first machine learning model set. The access network device deploys the machine learning model of the first machine learning model set, and/or the access network device instructs a terminal to deploy the machine learning model of the first machine learning model set. Therefore, on the side of the access network device and/or the terminal, it is possible to flexibly and quickly update, according to a change of a communication environment, the deployed machine learning model(s) to the machine learning model(s) suitable for the current communication environment, thereby improving the update efficiency and effect of the machine learning model(s) deployed in the communication system, and thus improving the performance of the communication system.

It will be appreciated that the content described in the above summary part of the present invention is not intended to limit key or important features of embodiments of the present invention, nor to limit the scope of the present invention. Other features of the present invention will become readily comprehensible from the following description.

### BRIEF DESCRIPTION OF DRAWINGS

In order to illustrate the technical solutions in the present application or the prior art more clearly, the accompanying drawings used in the description of the embodiments or the prior art will be briefly described hereunder. Apparently, the drawings in the following description are merely intended for some embodiments of present invention. For persons ordinarily skilled in the art, other drawings may be obtained based on these drawings without any creative effort.
FIG. 1 is a schematic diagram of an application scenario according to an embodiment of the present application.
FIG. 2 is a flowchart of a model update method in a communication system according to an embodiment of the present application.
FIG. 3 is a flowchart of a model update method in a communication system according to another embodiment of the present application.
FIG. 4 is a flowchart of a model update method in a communication system according to another embodiment of the present application.
FIG. 5 is a flowchart of a model update method in a communication system according to another embodiment of the present application.
FIG. 6 is a flowchart of a model update method in a communication system according to another embodiment of the present application.
FIG. 7 is a flowchart of a model update method in a communication system according to another embodiment of the present application.
FIG. 8 is a flowchart of a model update method in a communication system according to another embodiment of the present application.
FIG. 9 is a schematic diagram of a model update apparatus in a communication system according to an embodiment of the present application.
FIG. 10 is a schematic diagram of a model update apparatus in a communication system according to an embodiment of the present application.
FIG. 11 is a schematic diagram of a model update apparatus in a communication system according to an embodiment of the present application.
FIG. 12 is a schematic diagram of a model update apparatus in a communication system according to an embodiment of the present application.
FIG. 13 is a schematic diagram of a model update apparatus in a communication system according to an embodiment of the present application.
FIG. 14 is a schematic diagram of a model update apparatus in a communication system according to another embodiment of the present application.

### DESCRIPTION OF EMBODIMENTS

The term "and/or" in the present application is intended to describe an association relationship between associated objects, indicating that there can be three relationships, for example, A and/or B may represent the following cases: A exists alone, both A and B exist, and B exists alone. The character "j" generally indicates that contextually associated objects are in an "or" relationship. In the embodiments of the present application, the term "a plurality of" refers to two or more, and other quantifiers have the similar meaning thereto.

The technical solutions in the embodiments of the present application will be clearly and comprehensively described hereunder in conjunction with the accompanying drawings of the embodiments of the present application. Apparently, the described embodiments are merely a part of the embodiments of the present application, rather than all embodiments of the present application. All other embodiments obtained by those of ordinary skill in the art based on the embodiments of the present application without any creative effort should fall into the protection scope of the present application.

The technical solutions provided in the embodiments of the present application is applicable to various systems, especially a 5G system. For example, the applicable system may be a global system of mobile communication (global system of mobile communication, GSM), a code division multiple access (code division multiple access, CDMA) system, wideband code division multiple access (Wideband Code Division Multiple Access, WCDMA), a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system or the like. Each of the various systems includes a terminal and a network device. The system further includes a core network part, such as an evolved packet system (Evloved Packet System, EPS), a 5G system (5GS) and the like.

The communication system to which the technical solutions provided in the embodiment of the present application are applicable includes a network device and a terminal. The network device may include an access network device and a core network device. The access network device, for example, can be a radio access network device.

Some terms in the present application are explained hereunder for those skilled in the art to understand.

Core network (Core Network, CN) device: it can refer to an access and mobility management function (access and mobility management function, AMF) entity, or it can refer to a session management function (session management function, SMF) entity, a mobility management entity (mobility management entity, MME) or other core network device.

Access network (access network, AN) device: for example, a radio access network (radio access network, RAN) device, it is a device that connects a terminal to a wireless network, and can be an evolutional Node B (evolutional Node B, eNB or eNodeB) in long term evolution (long term evolution, LTE), or a relay or an access point, or a 5G base station (gNB) in a 5G network architecture (next generation system), or a home evolved base station (Home evolved Node B, HeNB), a relay node (relay node), a home base station (femto), a pico base station (pico) or the like, for which no limitation is made here. In one possible implementation, the radio access network device can be a base station (such as a gNB) with a centralized unit (centralized unit, CU) and distributed units (distributed unit, DU) separated architecture, and the CU and the During can also be arranged in such a manner that they are geographically separate.

Terminal: it may refer to a device providing voice and/or other data connectivity to a user, a handheld device with a wireless connection function, or other processing device connected to a wireless modem. In different systems, the terminal may vary in terms of its name. For example, in the 5G system, the terminal may be termed as a user equipment (User Equipment, UE). A wireless terminal can communicate with one or more core network devices (Core Network, CN) via a radio access network (Radio Access Network, RAN). The wireless terminal may be a mobile terminal such as a mobile phone (or termed as a "cellular" phone) and a computer having the mobile terminal, and it may be, for example, a portable, pocket, handheld, computer built-in or vehicle-mounted mobile device exchanging language and/or data with the radio access network, for example, a personal communication service (Personal Communication Service, PCS) phone, a cordless phone, a session initiation protocol (Session Initiated Protocol, SIP) phone, a wireless local loop (Wireless Local Loop, WLL) station, a personal digital assistant (Personal Digital Assistant, PDA) or other device. The wireless terminal may also be termed as a system, a subscriber unit (subscriber unit), a subscriber station (subscriber station), a mobile station (mobile station), a mobile platform (mobile), a remote station (remote station), an access point (access point), a remote terminal (remote terminal), an access terminal (access terminal), a user terminal (user terminal), a user agent (user agent), or a user device (user device), which is not limited in the embodiments of the present application.

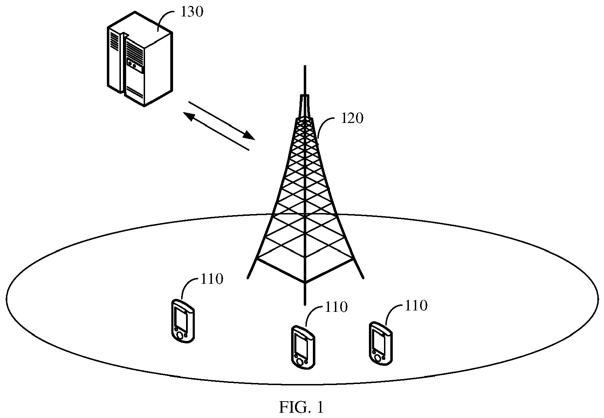

FIG. 1 is a schematic diagram of an application scenario according to an embodiment of the present application. As shown in FIG. 1, the communication system includes a network device and a terminal 110, where the network device may include an access network device 120 and a core network device 130. The terminal 110 is wirelessly connected to the access network device 120, and the access network device 120 is wirelessly or wiredly connected to the core network device 130.

The core network device 130 and the access network device 120 may be different separate physical devices, or the functions of the core network device 130 and the logical functions of the access network device 120 are integrated on the same physical device, or part of the functions of the core network device 130 and part of the functions of the access network device 120 may be integrated on one physical device. The terminal 110 may be positionally fixed, or movable. FIG. 1 is only a schematic diagram, the communication system may also include other network devices, and it may also include a radio relay device and a radio backhaul device, not drawn in FIG. 1. The core network device 130, the access network device 120 and the terminal 110 in the communication system are not numerically limited in the embodiments of the present application.

In the application scenario shown in FIG. 1, a machine learning model may be deployed on the core network device 130 and/or the terminal 110, and the machine learning model may, for example, be used for channel estimation, channel prediction, channel state information feedback and other operations of uplink and downlink channels between the core network device 130 and the terminal 110, so as to take advantage of the advantages of the machine learning model to improve the accuracy of these communication operations.

The model performance of the machine learning model depends on the training effect of the machine learning model, whereas the training effect of the machine learning model depends on two aspects: the first is the model architecture and the training algorithm of the machine learning model itself, and the second is the training data of the machine learning model. Generally, the more abundant the training data, the better the training effect of the machine learning model. In a communication system, a machine learning model trained with data under a certain communication environment tends to be only applicable to that communication environment, and when the communication environment changes, the machine learning model will not be applicable to the changed communication environment.

In related arts, one way is to re-collect new training data and retrain the machine learning model after the communication environment changes, which is less efficient and not suitable for a communication system emphasizing promptness; another way is to adopt a transfer learning strategy to reduce the amount of data required for model training and reduce the time for model training, where transfer learning, for example, is suitable for taking the machine learning model of the original communication environment as an initial model, and fine-tuning the initial model according to data in the changed communication environment. For another example, removing the last layer or several network layers of the machine learning model suitable for the original communication environment, replacing the removed network layer(s) with a new network layer, and training a parameter of the new network layer over less training data. The transfer learning reduces the amount of data and time required for model training, but it still cannot meet connectivity requirements for high promptness of the communication system.

In order to solve the above-mentioned problem, the present application provides a model update method and apparatus in a communication system and provides a storage medium. In the model update method in the communication system according to the embodiments of the present application, when a communication environment changes, find a machine learning model suitable for a current communication environment according to a first mapping relationship set and a plurality of machine learning models associated with the first mapping relationship set that are configured on a side of an access network device, to form a first machine learning model set; deploy, on the side of the access network device, the machine learning model of the first machine learning model set, and/or deploy, on a side of a terminal, the machine learning model of the first machine learning model set. Therefore, when the communication environment changes, the machine learning model(s) deployed in the communication system can be flexibly updated to the machine learning model(s) suitable for the current communication environment according to the pre-established mapping relationship between communication environment information and the machine learning models as well as the plurality of pre-established machine learning models, thereby improving the update efficiency and effect of the machine learning model(s) deployed in the communication system, and thus improving the performance of the communication system.

The method and the apparatus provided in the embodiments of the present application are based on the same application conception. Since the problem is solved with similar principles according to the method and the apparatus, cross reference can be made to the apparatus and method embodiments, and repetitions will be omitted.

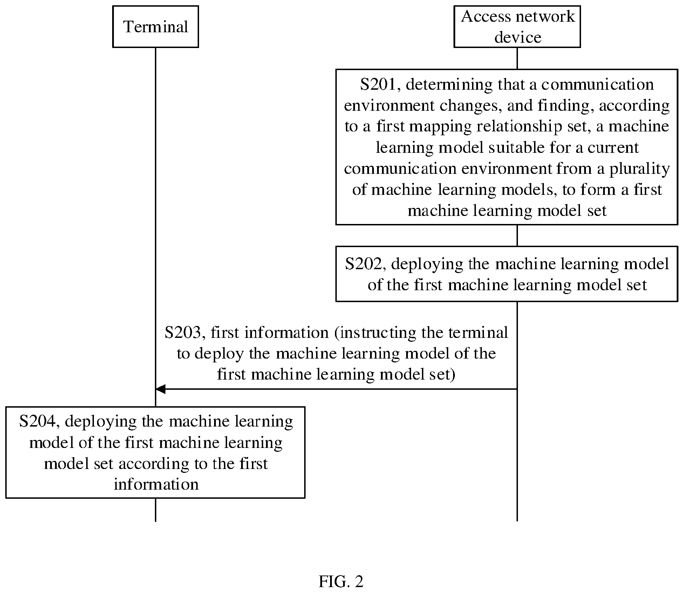

FIG. 2 is a schematic flowchart of a model update method in a communication system according to an embodiment of the present application. As shown in FIG. 2, the method in the present embodiment may include the following.

S201, an access network device determines that a communication environment changes, and finds, according to a first mapping relationship set, a machine learning model suitable for a current communication environment from a plurality of machine learning models, to form a first machine learning model set.

In the present embodiment, the access network device is configured with the first mapping relationship set and the plurality of machine learning models associated with the first mapping relationship set, and the first mapping relationship set includes mapping relationships between plural pieces of communication environment information and the plurality of machine learning models. The first mapping relationship set on the access network device may be singular or plural in number; if there are a plurality of first mapping relationship sets, the access network device is configured with a plurality of machine learning models associated with a respective one of the first mapping relationship sets.

In the first mapping relationship set, different communication environment information corresponds to different machine learning models, and one piece of communication environment information may correspond to one or more machine learning models. The one or more machine learning models corresponding to the piece of communication environment information are pre-trained based on communication data in a communication environment described by the communication environment information, which are suitable for the communication environment described by the communication environment information, and can play different roles in the communication environment described by the communication environment information.

For example, in the first mapping relationship(s), communication environment information A corresponds to machine learning model a, machine learning model b and machine learning model c, respectively, where machine learning model a is used for channel estimation in the communication environment described by communication environment information A, machine learning model b is used for channel prediction in the communication environment described by communication environment information A, and machine learning model c is used for channel state information feedback in the communication environment described by communication environment information A.

In the present embodiment, when determining that the communication environment changes, the access network device can find, in the first mapping relationship set, communication environment information matching the current communication environment, and acquire identification information of one or more machine learning models corresponding to the communication environment information matching the current communication environment, and acquire, according to the identification information of the one or more machine learning models, the machine learning model(s) from the plurality of machine learning models corresponding to the first mapping relationship set, where the acquired machine learning model(s) is(are) the machine learning model(s) suitable for the current communication environment, and the one or more machine learning models suitable for the current communication environment form the first machine learning model set.

The communication environment changing includes the communication environment on the side of the access network device changing and/or the communication environment on the side of the terminal communicating with the access network device changing.

Different machine learning models have different identification information, and a machine learning model has identification information such as a model number or a model label corresponding to the machine learning model.

Since after the communication environment changes, the machine learning model(s) deployed on the access network device and/or the machine learning model(s) deployed on the terminal is(are) no longer suitable for the current communication environment, execution of S202 and/or S203 is possible when the first machine learning model set is obtained, where the execution order of S202 and S203 is not limited herein. S202 can be executed before S203 or after S203, or S202 and S203 can be executed simultaneously.

S202, the access network device deploys the machine learning model of the first machine learning model set.

In the present embodiment, on the access network device, the machine learning model(s) of the first machine learning model set is(are) deployed, so that the machine learning model(s) suitable for the current communication environment is(are) deployed promptly on the access network device without retraining the machine learning model(s), thereby effectively improving the update efficiency and effect of the machine learning model(s) deployed on the access network device, and improving the model performance of the machine learning model(s) under the communication environment, and thus improving the performance of the communication system.

The deployment of the machine learning model(s) of the first machine learning model set on the access network device means that the access network device initializes the machine learning model(s) and runs the same according to the model parameter(s) of the machine learning model(s) of the first machine learning models.

S203, the access network device transmits first information to a terminal, where the first information is used to instruct the terminal to deploy the machine learning model of the first machine learning model set.

S204, the terminal deploys the machine learning model of the first machine learning model set according to the first information.

In the present embodiment, after the first machine learning model set is acquired, the first information may be transmitted to the terminal, where the first information includes the model parameter(s) of the machine learning model(s) of the first machine learning model set, and is used to instruct the terminal to deploy the machine learning model(s) of the first machine learning model set. After receiving the first information, the terminal deploys the machine learning model(s) of the first machine learning model set, so that the machine learning model(s) suitable for the current communication environment is(are) deployed promptly on the terminal without retraining the machine learning model(s), thereby effectively improving the update efficiency and effect of the machine learning model(s) deployed on the terminal, and improving the model performance of the machine learning model(s) in the communication system, and thus improving the performance of the communication system.

The deployment of the machine learning model(s) of the first machine learning model set on the terminal means that the terminal initializes the machine learning model(s) and runs same according to the model parameter(s) of the machine learning model(s) of the first machine learning models.

In an embodiment of the present application, when it is determined that a communication environment changes, a machine learning model suitable for a current communication environment is found according to a mapping relationship on an access network device between plural pieces of communication environment information and a plurality of machine learning models and according to the plurality of machine learning models configured on the access network device, and the machine learning model suitable for the current communication environment is deployed on the access network device and/or a terminal. In this way, according to a change of a communication environment, the machine learning model(s) deployed on the access network device and/or the terminal can be promptly updated to the machine learning model(s) suitable for the changed communication environment, thereby improving the update efficiency and effect of the machine learning model(s) deployed in the communication system, and improving the applicability and the model performance of the machine learning model(s) deployed in the communication system, and thus improving the performance of the communication system.

In some embodiments, the access network device may acquire communication environment information on a side of the access network device and communication environment information on a side of the terminal. When finding, according to the first mapping relationship set, the machine learning model suitable for the current communication environment from the plurality of machine learning models associated with the first mapping relationship set, it is possible to find the machine learning model from the plurality of machine learning models according to the first mapping relationship set, the communication environment information acquired on the side of the access network device and the communication environment information acquired on the side of the terminal, to obtain the machine learning model suitable for the current communication environment.

Specifically, among the plural pieces of communication environment information in the first mapping relationship set, each communication environment information includes the communication environment information on the side of the access network device and the communication environment information on the side of the terminal. For example, the communication environment information on the side of the access network device includes environmental parameters such as an antenna model parameter of the access network device and transmission power of the access network device. For example, the communication environment information on the side of the terminal includes environmental parameters such as an antenna model parameter of the terminal, transmission power of the terminal, a movement speed of the terminal, and a location of the terminal. Therefore, with comprehensive consideration of the communication environment on the side of the access network device and the communication environment on the side of the terminal, the completeness of the communication environment in the first mapping relationship set is improved, and thus the applicability and the model effect of the machine learning model(s) in the communication environment are improved. Taking an example where the access network device is a base station, the base station has an antenna model parameter, including, for example, a multi-antenna of the base station and a massive antenna of the base station (Massive-MIMO). The terminal has an antenna model parameter, including, for example, a single antenna of the terminal, a multi-antenna of the terminal, a movement speed of the terminal (including, for example, low-speed movement, high-speed movement, and stationary), and a location of the terminal (including, for example, indoor and outdoor).

Optionally, among the plural pieces of communication environment information in the first mapping relationship set, each communication environment information may also include an environmental parameter common to the access network device and the terminal, such as an operating frequency range between the access network device and the terminal, a large-scale path loss parameter, a communication scenario, and a distance between the access network device and the terminal. Each communication environment information may also include a fading parameter of a wireless communication channel, where the fading parameter of the wireless communication channel is for example a small-scale fading parameter, thereby further enriching the communication environment information and improving the completeness of the communication environment information.

The operating frequency range includes, for example, frequency range 1 (Frequency Range 1, FR1), frequency range 2 (Frequency Range 2, FR2), etc. The frequency range of FR1 is, for example, 450 megahertz (MHz) ~ 6 gigahertz (GHz); the frequency range of FR2 is, for example, 24.25GHz - 5.6GHz. The large-scale path loss parameter includes, for example, line-of-sight path loss, non-line-of-sight path loss, etc. For example, the small-scale fading parameter includes flat fading, frequency-selective fading, etc., where the flat fading includes flat slow fading and flat fast fading, and the frequency-selective fading includes frequency-selective fading and frequency-selective fast fading. The communication scenario includes an urban macro cell, an urban micro cell, an indoor hot spot, and large-scale continuous coverage (mainly featured in supporting high-speed mobility and vast coverage areas such as suburban and rural areas through continuous wide-area coverage).

As an example, the following table shows part of mapping relationships in the first mapping relationship set between plural pieces of communication environment information and a plurality of machine learning models, as shown in the following table:

| Identification information of machine learning model | Communication environment information |
|---|---|
| 1 | Urban macro cell - FR1 - line-of-sight path loss - flat fast fading - multi-antenna of base station/single antenna of terminal - medium speed movement |
| 2 | Urban macro cell - FR1 - non-line-of-sight path loss - flat slow fading - multi-antenna of base station/single antenna of terminal - low speed movement |
| 3 | Urban micro cell - FR1 - non-line-of-sight path loss - frequency-selective slow fading - multi-antenna of base station/single antenna of terminal - low speed movement |
| 4 | Urban micro cell - FR1 - line-of-sight path loss - flat slow fading - multi-antenna of base station/single antenna of terminal - low speed movement |
| 5 | Indoor hotspot - FR2 - non-line-of-sight path loss - flat slow fading - Maccive MIMO of base station/multi-antenna of terminal - low speed movement |
| 6 | Indoor hotspot - FR2 - line-of-sight path loss - flat slow fading - Maccive-MIMO of base station/multi-antenna of terminal - stationary |
| 7 | Large-scale continuous coverage - FR1 - line-of-sight path loss - frequency-selective fast fading - multi-antenna of base station/single antenna of terminal - high speed movement |
| 8 | Large-scale continuous coverage - FR1 - line-of-sight path loss - frequency-selective slow fading - multi-antenna of base station/single antenna of terminal - low speed movement |

Specifically, the process of finding, according to the first mapping relationship set, the communication environment information acquired on the side of the access network device and the communication environment information acquired on the side of the terminal, the communication environment information acquired on the side of the access network device and the communication environment information acquired on the side of the terminal can be compared with the plural pieces of communication environment information in the first mapping relationship set. Communication environment information in the first mapping relationship set that is closest to the communication environment information acquired on the side of the access network device and the communication environment information acquired on the side of the terminal is determined, and identification information of the machine learning model(s) corresponding to the closest communication environment information is acquired. Then, the machine learning model(s) corresponding to the acquired identification information of the machine learning model(s) is(are) found from the plurality of machine learning models associated with the first mapping relationship set, that is, obtaining the machine learning model(s) suitable for the current communication environment.

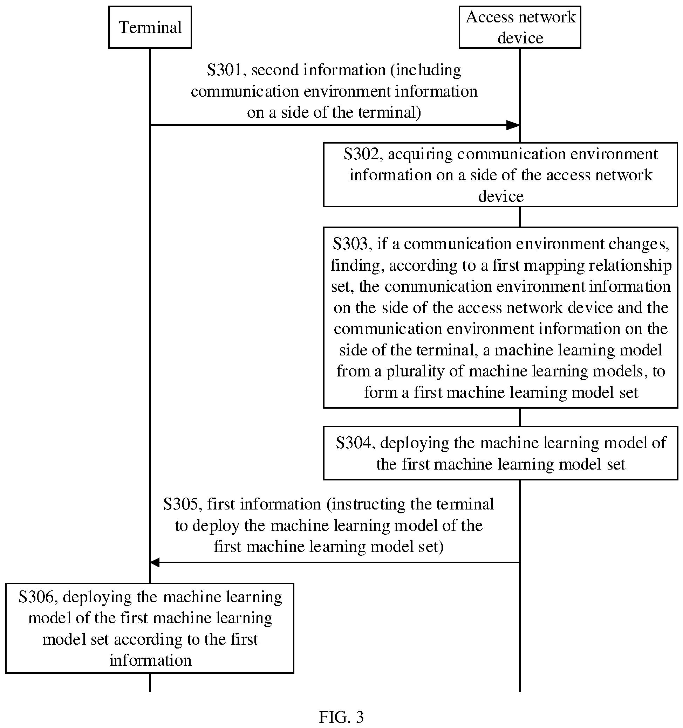

FIG. 3 is a schematic flowchart of a model update method in a communication system according to another embodiment of the present application. As show in FIG. 3, the method in the present embodiment includes the following.

S301, the terminal transmits second information to the access network device, where the second information includes communication environment information on a side of the terminal.

The terminal can periodically transmit the second information to the access network device, to periodically transmit the communication environment information on the side of the terminal to the access network device; or, the terminal may transmit, upon a detection that its own communication environment has changed significantly, the second information to the access network device, for example, transmitting the second information to the access network device when detecting that its own movement speed changes from high-speed movement to low-speed movement.

Optionally, in addition to the manner that the terminal actively transmits the communication environment information to the access network device, that is, actively transmitting the second information, the terminal can transmit third information to the access network device, and in response to the third information, the access network device acquires the second information, that is, the access network device actively acquires the communication environment information on the side of the terminal. The third information is used to instruct the access network device to acquire the second information, and the third information is for example a reference signal (Reference Signal, RS).

S302, the access network device acquires communication environment information on a side of the access network device.

S303, if a communication environment changes, the access network device finds, according to a first mapping relationship set, the communication environment information on the side of the access network device and the communication environment information on the side of the terminal, a machine learning model from a plurality of machine learning models, to form a first machine learning model set.

For the implementation process of S302 and S303, reference may be made to the foregoing embodiments, and details will not be described again.

Optionally, the access network device can determine, according to the communication environment information acquired on the side of the terminal and/or the communication environment information acquired on the side of the access network device, whether the communication environment changes, so as to improve the accuracy of determination with regard to whether the communication environment changes.

Further, when determining, according to the communication environment information acquired on the side of the terminal and/or the communication environment information acquired on the side of the access network device, whether the communication environment changes, it can be determined, according to communication environment information at a previous time moment on the side of the access network device and communication environment information at a current time moment on the side of the access network device, whether the environment information changes; and/or, it can be determined, according to communication environment information at a previous time moment on the side of the terminal and communication environment information at a current time moment on the side of the terminal, whether the communication environment changes. Therefore, when the communication environment on the side of the access network device changes and/or the communication environment on the side of the terminal changes, it is determined that the communication environment changes.

In one possible implementation, when determining, according to the communication environment information at the previous time moment on the side of the access network device and the communication environment information at the current time moment on the side of the access network device, whether the environment information changes, each environmental parameter in the communication environment information at the previous time moment on the side of the access network device can be compared with each environmental parameter in the communication environment information at the current time moment on the access network device; and if different environmental parameters exist in the communication environment information at the previous time moment on the side of the access network device and the communication environment information at the current time moment on the access network device, it is determined that the environment changes.

In another possible implementation, when determining, according to the communication environment information at the previous time moment on the side of the access network device and the communication environment information at the current time moment on the side of the access network device, whether the environment information changes, it can be determined, according to each environmental parameter in the communication environment information at the previous time moment on the side of the access network device, each environmental parameter in the communication environment information at the current time moment on the side of the access network device and mapping relationships between a plurality of environmental parameters and preset thresholds, whether the communication environment changes.

Specifically, for each environmental parameter, the value of the environmental parameter in the communication environment information at the previous time moment on the side of the access network device is compared with the value of the environmental parameter in the communication environment information at the current time moment on the side of the access network device, to obtain a difference, and determination is made with regard to whether the difference is greater than the preset threshold corresponding to the environmental parameter. If there are a preset number of environmental parameters, and differences between their values in the communication environment information at the previous time moment on the side of the access network device and their values in the communication environment information at the current time moment on the side of the access network device are greater than corresponding preset thresholds, it is determined that the communication environment changes. For example, if a difference between a transmission power of the access network device at the previous time moment and a transmission power of the access network device at the current time moment is greater than a corresponding preset threshold about transmission power, it is determined that the communication environment changes.

Further, when determining, according to communication environment information at a previous time moment on the side of the terminal and the communication environment information at the current time moment on the side of the terminal, whether the environment information changes, it can be determined, according to each environmental parameter in the communication environment information at the previous time moment on the side of the terminal, each environmental parameter in the communication environment information at the current time moment on the side of the terminal and mapping relationships between a plurality of environmental parameters and preset thresholds, whether the communication environment changes. For details, reference may be made to the foregoing description and the description about determining, based on the communication environment information of the access network device, whether the communication environment changes, which will not be described again.

For example, if a difference between a movement speed of the terminal at the previous time moment and a movement speed of the terminal at the current time moment is greater than a corresponding preset threshold about moving speed, and a difference between a distance between the terminal and the access network device at the previous time moment and a distance between the terminal and the access network device at the current time moment is greater than a corresponding preset threshold about distance between the terminal and the access network device, it is determined that the communication environment changes.

After the first machine learning model set is obtained, execution of S304 and/or S305 is proceeded.

S304, the access network device deploys the machine learning model of the first machine learning model set.

S305, the access network device transmits first information to the terminal, where the first information is used to instruct the terminal to deploy the machine learning model of the first machine learning model set.

S306, the terminal deploys the machine learning model of the first machine learning model set according to the first information.

For the implementation process of S304 to S306, reference may be made to the description of the forgoing embodiments, which will not be described again.

In the embodiment of the present application, the access network device receives the second information transmitted by the terminal, obtains the communication environment information on the side of the terminal, finds the machine learning model suitable for the current communication environment according to the first mapping relationship set, the communication environment information on the side of the terminal and the communication environment information on the side of the access network device, and deploys, on the access network device and/or the terminal, the machine learning model suitable for the current communication environment. Therefore, according to the change of the communication environment, the machine learning model(s) deployed on the side of the access network and/or the terminal can be promptly updated to the machine learning model(s) suitable for the communication environment, thereby improving the update efficiency and effect of deployment of the machine learning model(s) deployed in the communication system, improving the applicability and model effect of the machine learning model(s) in the communication system, and thus improving the performance of the communication system.

In some embodiments, on the side of the access network device, in addition to determining, according to the communication environment information on the side of the access network device and/or the communication environment information on the side of the terminal, whether the communication environment changes, it can be determined that the communication environment changes when the terminal performs cell switching; or if the access network device receives a message transmitted by the terminal indicating a radio resource management (Radio Resource Control, RRC) connection establishment (such as a message, indicating an RRC connection establishment, transmitted to the access network device when the terminal is just turned on) or a message indicating an RRC connection reestablishment, the access network device can determine that the communication environment on the side of the terminal changes, that is, it is determined that the communication environment changes. Therefore, with a more comprehensive consideration of different situations in which the communication environment changes, the accuracy of the determination of the change of the communication environment is improved, and thus the effect of the deployment of the machine learning model(s) is improved.

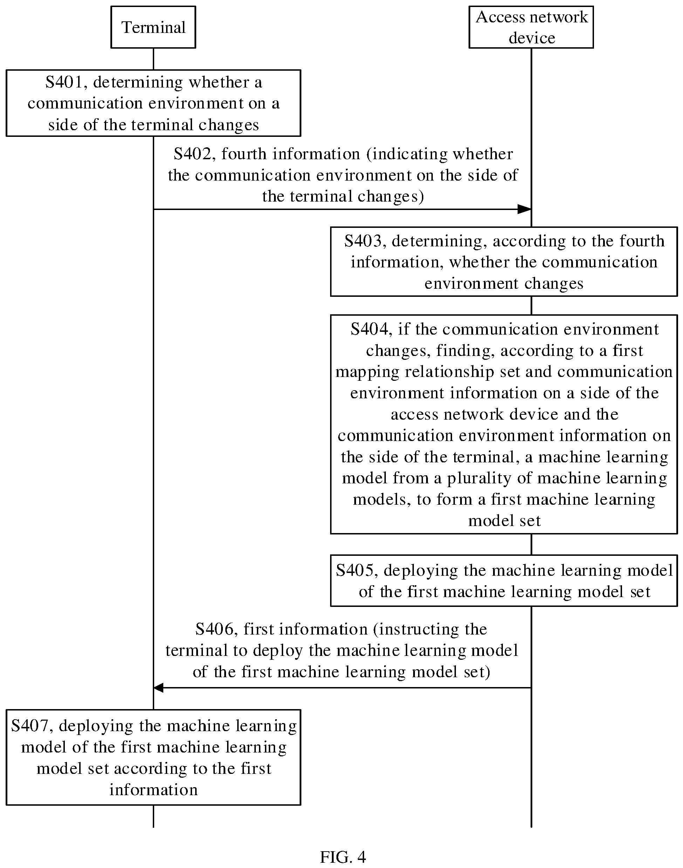

FIG. 4 is a schematic flowchart of a model update method in a communication system according to another embodiment of the present application. As shown in FIG. 4, the method in the present embodiment may include the following.

S401, determining, on the terminal, whether a communication environment on a side of the terminal changes.

Compared with the forgoing embodiments where the determination is made on the access network device with regard to whether the communication environment changes, the present embodiment allows to determine, on the terminal, whether the communication environment on the side of the terminal changes, so as to improve the promptness and the accuracy of the determination of the change of the communication environment on the side of the terminal.

In the present embodiment, the terminal may acquire the communication environment information on the side of the terminal in real time or periodically, and determine, according to the communication environment information at the previous time moment on the side of the terminal and the communication environment information at the current time moment on the side of the terminal, whether the communication environment on the side of the terminal changes.

For example, each environmental parameter in the communication environment information at the previous time moment on the side of the terminal is compared with each environmental parameter in the communication environment at the previous time moment on the side of the terminal, and if the communication environment information at the previous time moment on the side of the terminal and the communication environment information at the previous time moment on the side of the terminal have different environmental parameters exceeding a preset number, it is determined that the communication environment on the side of the terminal changes. Alternatively, if there are a preset number of environmental parameters, and differences between their values in the communication environment information at the previous time moment on the side of the terminal and their values in the communication environment information at the current time moment on the side of the terminal exceed corresponding preset thresholds, it is determined that the communication environment on the side of the terminal changes. For details, reference may be made to relevant description of the foregoing embodiments.

S402, the terminal transmits fourth information to the access network device according to whether the communication environment on the side of the terminal changes, where the fourth information is used to indicate whether the communication environment on the side of the terminal changes, including: the fourth information indicates that the communication environment on the side of the terminal changes or the fourth information indicates that the communication environment on the side of the terminal does not change.

In the present embodiment, after determining whether the communication environment on the side of the terminal changes, the terminal can transmit fourth information to the access network device, so that the access network device can directly know, according to the fourth information, whether the communication environment on the side of the terminal changes, and when the fourth information indicates that the communication environment on the side of the terminal changes, the access network device does not need to determine, according to the communication environment information of the terminal and the communication environment information of the access network device, whether the communication environment changes.

In the present embodiment, if it is determined that the communication environment on the side of the terminal changes, the fourth information indicates that the communication environment on the side of the terminal changes, and the fourth information includes the communication environment information on the side of the terminal and/or identification information of a machine learning model requested by the terminal, so that the access network device returns to the terminal the machine learning model(s) suitable for the current communication environment according to the communication environment information on the side of the terminal and/or the identification information of the machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, in other words, the fourth mapping relationship set includes therein the correspondence between plural pieces of communication environment information of the terminal and identification information of a plurality of machine learning models. Therefore, after the terminal acquires its own communication environment information and determines, according to its own communication environment information, that the communication environment on the side of the terminal changes, the terminal can find from the fourth mapping relationship set, according to current communication environment information on the side of the terminal, identification information of a machine learning model corresponding to the current communication environment information on the side of the terminal. The identification information of the found machine learning model is the identification information of the machine learning model requested by the terminal.

Further, in the fourth mapping relationship set, different communication environment information corresponds to different machine learning models, one piece of communication environment information may correspond to one or more machine learning models, and the one or more machine learning models corresponding to the piece of communication environment information are suitable for playing different roles under the communication environment of the communication environment information, for example, one machine learning model is used for channel estimation under the communication environment of the communication environment information, and another machine learning model is used for channel prediction.

S403, the access network device determines, according to the fourth information, whether the communication environment changes.

In the present embodiment, after receiving the fourth information transmitted by the terminal, the access network device can directly know, according to the fourth information, whether the communication environment on the side of the terminal changes. If the fourth information indicates that the communication environment on the side of the terminal changes, the access network device determines that the communication environment changes. If the fourth information indicates that the communication environment on the side of the terminal has not changed, the access network device can determine that the communication environment has not changed. Or, in further combination with whether the communication environment on the side of the access network device changes, it is possible to determine whether the communication environment changes. For details, reference may be made to the foregoing embodiments, which will not be described again.

S404, if the communication environment changes, the access network device finds, according to a first mapping relationship set and communication environment information on a side of the access network device and the communication environment information on the side of the terminal and/or identification information of a machine learning model requested by the terminal, a machine learning model from a plurality of machine learning models, to form a first machine learning model set.

In the present embodiment, if it is determined that the communication environment changes, it indicates a need to find a machine learning model suitable for the current communication environment. The access network device acquires the communication environment information on the side of the access network device. If the fourth information includes therein the communication environment information on the side of the terminal, the access network device can find, according to the first mapping relationship set, the communication environment information on the side of the access network device and the communication environment information on the side of the terminal, the machine learning model(s) suitable for the current communication environment from the plurality of machine learning models associated with the first mapping relationship set, and the first machine learning model set is formed from one or more machine learning models suitable for the current communication environment.

In the present embodiment, if the fourth information includes identification information of a machine learning model requested by the terminal, the access network device, according to the identification information of the machine learning model requested by the terminal, can directly find, from the plurality of machine learning models associated with the first mapping relationship set, one or more machine learning models corresponding to the identification information of the machine learning model requested by the terminal. The one or more machine learning models that are found form the first machine learning model set.

After the first machine learning model set is obtained, execution of S405 and/or S406 is proceeded.

S405, the access network device deploys the machine learning model of the first machine learning model set.

S406, the access network device transmits first information to the terminal, where the first information is used to instruct the terminal to deploy the machine learning model of the first machine learning model set.

S407, the terminal deploys the machine learning model of the first machine learning model set according to the first information.

For the implementation process of S405 to S407, reference may be made to the description of the forgoing embodiments, which will not be described again.

In the embodiment of the present application, determination is made on the terminal with regard to whether the communication environment on the side of the terminal changes, the terminal transmits the fourth information to the access network device, and the access network device finds the machine learning model suitable for the current communication environment according to the first mapping relationship set, the fourth information and the communication environment information on the side of the access network device, and deploys, on the access network device and/or the terminal, the machine learning model suitable for the current communication environment. Therefore, the accuracy of the determination of the change of the communication environment is improved, and according to the change of the communication environment, the machine learning model(s) deployed on the access network device and/or the terminal can be promptly and accurately updated to the machine learning model(s) suitable for the communication environment, thereby improving the update efficiency and effect of the machine learning model(s) deployed in the communication system, improving the applicability and model performance of the machine learning model(s) in the communication system, and thus improving the performance of the communication system.

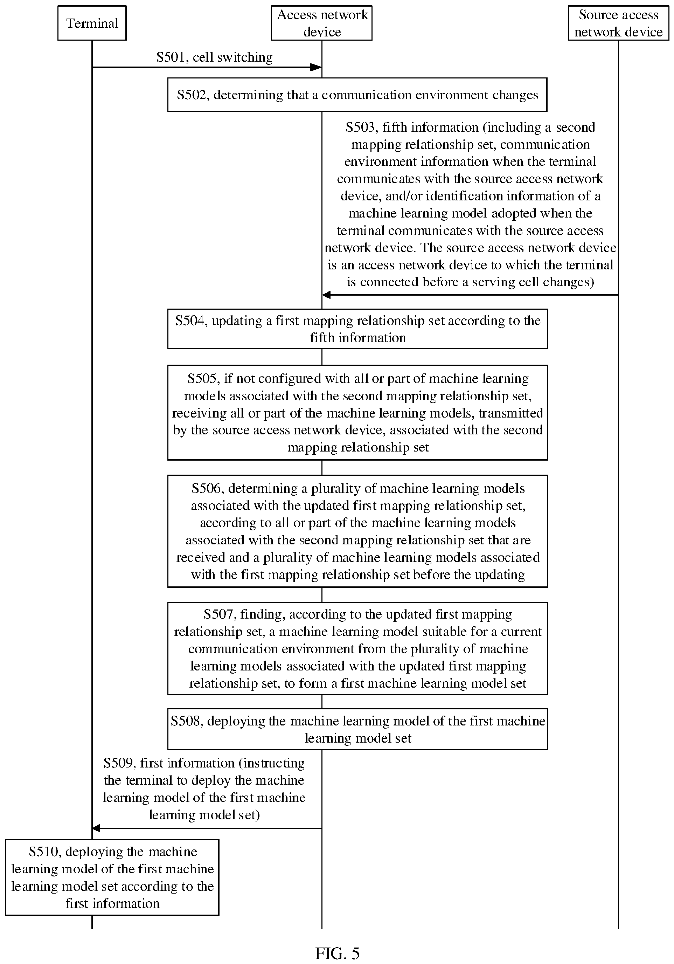

FIG. 5 is a schematic flowchart of a model update method in a communication system according to another embodiment of the present application. As shown in FIG. 5, a terminal, an access network device and a source access network device are included in FIG. 5, at this time, the access network device can be conceived as a target access network device of the terminal. The method in the present embodiment may include the following.

S501, the terminal performs cell switching, that is, switches to the access network device.

For example, the access network device receives a switching request transmitted by the source access network device of the terminal, then the terminal switches from the source access network device to the access network device, and the terminal performs cell switching.

S502, the access network device determines that a communication environment changes.

The access network device can determine that the communication environment changes, when the terminal performs cell switching.

S503, the source access network device transmits fifth information to the access network device.

The fifth information includes a second mapping relationship set, communication environment information when the terminal communicates with the source access network device, and/or identification information of a machine learning model adopted when the terminal communicates with the source access network device. The source access network device is an access network device to which the terminal is connected before the cell switching.

The second mapping relationship set is a subset of mapping relationship associated with the terminal in mapping relationship between plural pieces of communication environment information configured on the source access network device and the plurality of machine learning models.

For example, in the mapping relationships on the source access network device between the plural pieces of communication environment information and the plurality of machine learning models, mapping relationships between communication environment information of the terminal at different time moments and the plurality of machine learning models are acquired, and the second mapping relationship set is obtained by combining the acquired mapping relationships; alternatively, mapping relationships between the plural pieces of communication environment information and machine learning models collected when the terminal communicates with the source access network device are acquired, and the second mapping relationship set is obtained by combining the acquired mapping relationships; alternatively, mapping relationships between communication environment information when the terminal communicates with the source access network device and machine learning models adopted when the terminal communicates with the access network device are acquired, and the second mapping relationship set is obtained by combining the acquired mapping relationships.

In the present embodiment, when the terminal performs cell switching, the terminal switches from the source access network device to a current access network device, and considering that the source access network device of the terminal has stored thereon the machine learning model(s), the communication environment information and other information adopted when the terminal communicates with the source access network device, the source access network device transmits fifth information to the current access network device when the terminal undergoes cell changing.

S504, the access network device updates a first mapping relationship set according to the fifth information.

In the present embodiment, when receiving the fifth information transmitted by the source access network device, the access network device updates the first mapping relationship set according to the following information in the fifth information: the second mapping relationship set, the communication environment information when the terminal communicates with the source access network device, and/or the identification information of the machine learning model adopted when the terminal communicates with the source access network device, so as to enrich the first mapping relationship set in a targeted manner, thereby improving the accuracy of finding the machine learning model(s) suitable for the current environment information based on the first mapping relationship set.

When updating the first mapping relationship set, one possible implementation is to consolidate the communication environment information when the terminal communicates with the source access network device with the plural pieces of communication environment information in the first mapping relationship set, so as to increase the communication environment information associated with the terminal in the first mapping relationship set.

When updating the first mapping relationship set, another possible implementation is to consolidate the identification information of the machine learning model(s) adopted when the terminal communicates with the source access network device with the identification information of the plurality of machine learning models in the first mapping relationship set, so as to increase the identification information of the machine learning model(s) associated with the terminal in the first mapping relationship set.

When updating the first mapping relationship set, another possible implementation is to consolidate the second mapping relationship set with the first mapping relationship set, so as to increase the mapping relationship(s), in the first mapping relationship set, between the communication environment information associated with the terminal and the machine learning model(s).

S505, if the access network device is not configured with all or part of machine learning models associated with the second mapping relationship set, receiving all or part of the machine learning models, transmitted by the source access network device, associated with the second mapping relationship set.

In the present embodiment, in the case that the fifth information includes the second mapping relationship set, if the access network device is not configured with all or part of machine learning models associated with the second mapping relationship set, that is, the access network device is not configured with the machine learning model(s) corresponding to all or part of identification information in the second mapping relationship set, it indicates that the machine learning model(s) adopted when the terminal communicates with the source access network device is(are) absent from the access network device. Therefore, the access network device may: transmit, to the source access network device, a message requesting for all or part of machine learning models associated with the second mapping relationship set, where the message may include identification information of all or part of the machine learning models associated with the second mapping relationship set; and receive all or part of the machine learning models, returned by the source access network device, associated with the second mapping relationship set.

Machine learning models have uniform identification information on different access network devices. In other words, the identification information of the machine learning models is not only unique on the current access network device, but also unique on a plurality of access network devices, so that the access network device can find from the plurality of machine learning models configured on itself, according to the identification information of the machine learning model(s) in the second mapping relationship set, whether there is a machine learning model corresponding to the identification information of the machine learning model(s) in the second mapping relationship set. If it is impossible to find a machine learning model corresponding to identification information of one or more machine learning models in the second mapping relationship set, it is determined that the access network device is not configured with all or part of the machine learning models associated with the second mapping relationship set.

S506, the access network device determines a plurality of machine learning models associated with the updated first mapping relationship set, according to all or part of the machine learning models associated with the second mapping relationship set that are received and a plurality of machine learning models associated with the first mapping relationship set before the updating.

In the present embodiment, after the access network device receives all or part of the machine learning models, transmitted by the source access network device, associated with the second mapping relationship set, all or part of the machine learning models associated with the second mapping relationship set can be consolidated with the plurality of machine learning models associated with the first mapping relationship set before the updating, to obtain a plurality of machine learning models associated with the updated first mapping relationship set, thereby targetedly enriching the machine learning models associated with the first mapping relationship set.

S507, the access network device finds, according to the updated first mapping relationship set, a machine learning model suitable for a current communication environment from the plurality of machine learning models associated with the updated first mapping relationship set, to form a first machine learning model set.

In the present embodiment, according to the communication environment information on the side of the access network and the communication environment information on the side of the terminal, the identification information of the machine learning model(s) suitable for the current communication environment information can be found from the updated first mapping relationship set, and then according to the identification information, the corresponding machine learning model(s) is(are) acquired from the plurality of machine learning models associated with the updated first mapping relationship set, where the first machine learning model set is formed from one or more machine learning models that are acquired. Alternatively, the fourth information transmitted by the terminal can be received, and according to the identification information of the machine learning model(s) requested by the terminal in the fourth information, from the plurality of machine learning models associated with the first mapping relationship set, where the first machine learning model set is formed from one or more machine learning models that are acquired. For details, reference may be made to the foregoing embodiments, which will not be described again.

After the first machine learning model set is obtained, execution of S508 and/or S509 is proceeded.

S508, the access network device deploys the machine learning model of the first machine learning model set.

S509, the access network device transmits first information to the terminal, where the first information is used to instruct the terminal to deploy the machine learning model of the first machine learning model set.

S510, the terminal deploys the machine learning model of the first machine learning model set according to the first information.

For the implementation process of S508 to S510, reference may be made to the description of the foregoing embodiments, which will not be described again.

In the embodiment of the present application, when the terminal performs cell switching, the access network device updates, according to the fifth information transmitted by the source access network device, the first mapping relationship set and the plurality of machine learning models associated with the first mapping relationship set, finds the machine learning model(s) suitable for the current communication environment based on the updated first mapping relationship set and the plurality of machine learning models associated with the updated first mapping relationship set, and deploys, on the access network device and/or the terminal, the machine learning model(s) suitable for the current communication environment. Therefore, according to the change of the communication environment, the machine learning model(s) deployed on the access network device and/or the terminal can be promptly and accurately updated to the machine learning model(s) suitable for the communication environment, thereby improving the update efficiency and effect of the machine learning model(s) deployed in the communication system, improving the applicability and model performance of the machine learning model(s) in the communication system, and thus improving the performance of the communication system.

In some embodiments, it is also possible to find, on the core network device, the machine learning model(s) suitable for the current communication environment, to form the second machine learning model set, and the core network device transmits the second machine learning model set to the access network device so that the machine learning model(s) of the second machine learning model set is(are) deployed in the communication system, thereby taking advantage of characteristics of the core network device in terms of more powerful performance to improve the accuracy of finding the machine learning model(s), and thus improving the update effect of the machine learning model(s).

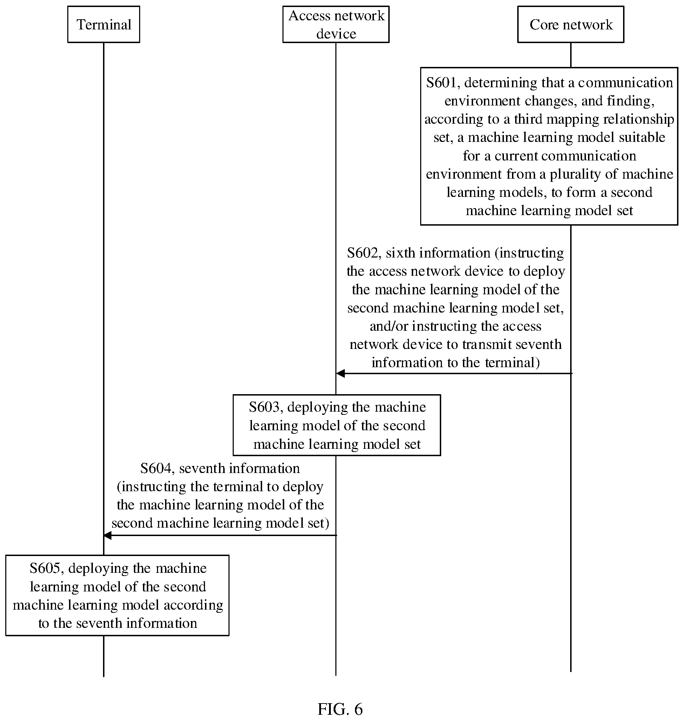

The second machine learning model set includes one or more machine learning models suitable for the current communication environment that are found, according to a third mapping relationship set on the core network device, from a plurality of machine learning models associated with the third mapping relationship set. For details, reference may be made to the embodiments as shown in FIG. 6.

FIG. 6 is a schematic flowchart of a model update method in a communication system according to another embodiment of the present application. As shown in FIG. 6, the method in the present embodiment may include the following.

S601, a core network device determines that a communication environment changes, and finds, according to a third mapping relationship set, a machine learning model suitable for a current communication environment from a plurality of machine learning models, to form a second machine learning model set.

In the present embodiment, the core network device is configured with the third mapping relationship set and the plurality of machine learning models associated with the third mapping relationship set, and the third mapping relationship set includes mapping relationships between plural pieces of communication environment information and the plurality of machine learning models. The third mapping relationship set on the access network device may be singular or plural in number; if there are a plurality of third mapping relationship sets, the access network device is configured with a plurality of machine learning models associated with a respective one of the third mapping relationship sets.

In the third mapping relationship set, different communication environment information corresponds to different machine learning models, and one piece of communication environment information may correspond to one or more machine learning models. The one or more machine learning models corresponding to the piece of communication environment information are pre-trained based on communication data in a communication environment described by the communication environment information, which are suitable for the communication environment described by the communication environment information, and can play different roles in the communication environment described by the communication environment information. For example, one machine learning model corresponding to a piece of communication environment information is used for channel estimation in a communication environment described by the communication environment information, while another machine learning model corresponding to the communication environment information is used for channel prediction in the communication environment described by the communication environment information.

In the present embodiment, when determining that the communication environment changes, the core network device can find, in the third mapping relationship set, identification information of one or more machine learning models corresponding to the current communication environment. The core network device acquires, according to the found identification information of the one or more machine learning models, one or more machine learning models from the plurality of machine learning models associated with the third mapping relationship set, where the one or more machine learning models that are acquired are the machine learning model(s) suitable for the current communication environment. Therefore, the one or more machine learning models that are acquire form the second machine learning model set.

In one possible implementation, when constructing the third mapping relationship set and the plurality of machine learning models associated with the third mapping relationship set, the core network device can: receive first mapping relationship sets transmitted by a plurality of access network devices and a plurality of machine learning models associated with the first mapping relationship sets; and establish or update the third mapping relationship set according to the first mapping relationship sets transmitted by the plurality of access network devices and the plurality of machine learning models associated with the first mapping relationship sets.

Specifically, the core network device can summarize the first mapping relationship sets of the plurality of access network devices to obtain the third mapping relationship set, and summarize the plurality of machine learning models associated with the first mapping relationship sets of the plurality of access network devices to obtain the plurality of machine learning models associated with the third mapping relationship set. For example, same machine learning models are de-duplicated, and identification information of different machine learning models is determined, to unify the identification information of the machine learning models on the plurality of access network devices.

Specifically, when the access network devices update the first mapping relationship sets and the plurality of machine learning models associated with the first mapping relationship sets, the core network device can receive the updated first mapping relationship sets and the updated machine learning models transmitted by the access network devices, and promptly update the third mapping relationship set and the plurality of machine learning models associated with the third mapping relationship set, to improve the accuracy and effectiveness of the third mapping relationship set and the machine learning models on the side of the core network device.

For example, the access network device, per a preset period, retrains one or more machine learning models according to the recently collected communication data, and adds, in the first mapping relationship set, the mapping relationship(s) between model identification of the retrained machine learning model(s) and corresponding communication environment information, and transmits the updated first mapping relationship set and the updated machine learning models to the core network device.

For another example, the core network device can periodically collect the first mapping relationship sets on the plurality of access network devices and the plurality of machine learning models associated with the first mapping relationship sets, to promptly and actively update the third mapping relationship set and the plurality of machine learning models associated with the third mapping relationship set.

Further, after obtaining the third mapping relationship set and the plurality of machine learning models associated with the third mapping relationship set, the core network device can transmit the third mapping relationship set and the plurality of machine learning models associated with the third mapping relationship set to a plurality of access network devices, or transmit part of mapping relationships of the third mapping relationship set and a plurality of machine learning models associated with part of the mapping relationships to a plurality of access network devices; the access network devices update the received mapping relationships to the first mapping relationship sets, and update the plurality of machine learning models associated with the received mapping relationships to the plurality of machine learning models associated with the first mapping relationship sets, thereby achieving interoperability of identification information of machine learning models on different access network devices.

In another possible implementation, the core network device can periodically collect communication data and train the machine learning model(s) according to the collected communication data, and construct and/or update a third mapping relationship set and a plurality of machine learning models associated with the third mapping relationship set according to the trained machine learning model(s) and the communication environment information in the communication environment corresponding to the machine learning model(s). Therefore, the more powerful core network device is used to train machine learning models and establish mapping relationships between the machine learning models and communication environment information, so as to improve the efficiency and effect of generation of the machine learning models and the mapping relationships.

S602, the core network device transmits sixth information including the second machine learning model set to an access network device, where the sixth information is used to instruct the access network device to deploy the machine learning model of the second machine learning model set, and/or to instruct the access network device to transmit seventh information to the terminal.

In the present embodiment, after obtaining the second machine learning model set, the core network device can transmit sixth information including the second machine learning model set to an access network device. If the sixth information instructs the access network device to deploy the machine learning model of the second machine learning model set, execution of S603 is proceeded. If the sixth information instructs the access network device to transmit seventh information to a terminal, then execution of S604 is proceeded. If the sixth information instructs the access network device to deploy the machine learning model of the second machine learning model set and instructs the access network device to transmit seventh information to a terminal, executions of S603 and S604 are proceeded.

S603, the access network device deploys the machine learning model of the second machine learning model set.

S604, the access network device transmits seventh information to the terminal, where the seventh information is used to instruct the terminal to deploy the machine learning model of the second machine learning model set.

S605, the terminal deploys the machine learning model of the second machine learning model set according to the seventh information.

For the implementation process of S603 to S605, reference may be made to the description of the foregoing embodiments, which will not be described again.

In the embodiment of the present application, when determining that the communication environment changes, the core network device finds the machine learning model(s) suitable for the current communication environment, to form the second machine learning model set, and transmits the second machine learning model set to the access network device so that the machine learning model(s) of the second machine learning model set is(are) deployed in the communication system, hence the core network device can be configured with more machine learning models and more mapping relationships, thereby improving the accuracy of finding the machine learning model(s), and thus improving the update effect of the machine learning model(s) in communication system.

In some embodiments, the core network device may acquire communication environment information on a side of the access network device and communication environment information on a side of the terminal. It is possible to find a machine learning model from the plurality of machine learning models associated with the third mapping relationship set according to the third mapping relationship set, the communication environment information acquired on the side of the access network device and the communication environment information acquired on the side of the terminal, to obtain the machine learning model(s) suitable for the current communication environment, thereby improving the accuracy of finding the machine learning model(s).

For the implementation process of finding the machine learning model from the plurality of machine learning models associated with the third mapping relationship set according to the third mapping relationship set, the communication environment information acquired on the side of the access network device and the communication environment information acquired on the side of the terminal, reference may be made to descriptions in the foregoing embodiments where the machine learning model is found from the plurality of machine learning models associated with the first mapping relationship set according to the first mapping relationship set, the communication environment information acquired on the side of the access network device and the communication environment information acquired on the side of the terminal, which will not be described again.

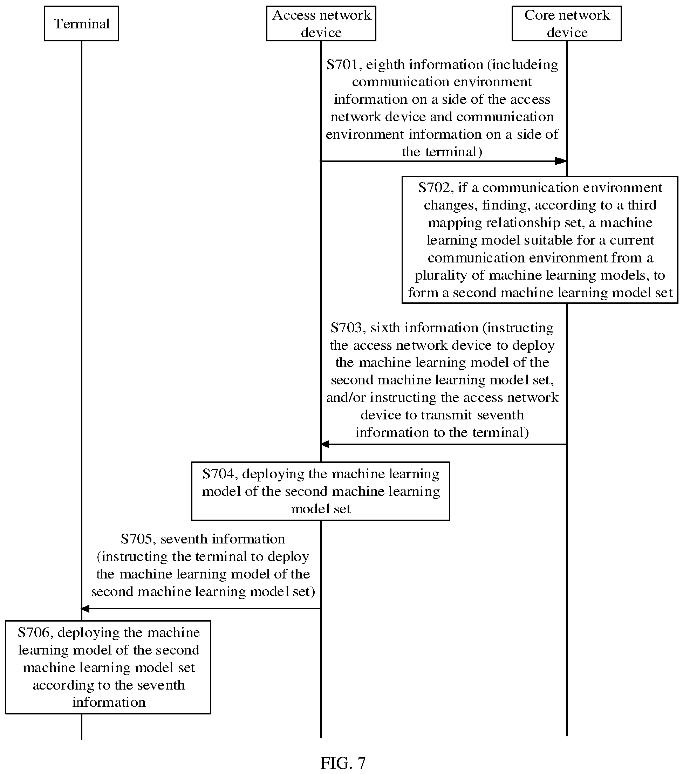

FIG. 7 is a schematic flowchart of a model update method in a communication system according to another embodiment of the present application. As shown in FIG. 7, the method in the present embodiment may include the following.

S701, the access network device transmits eighth information to the core network device, where the eighth information includes communication environment information on a side of the access network device and communication environment information on a side of the terminal.

The access network device can periodically transmit the eighth information to the core network device, so as to periodically transmit the communication environment information on the side of the access network device and the communication environment information on the side of the terminal to the core network device. Alternatively, the access network device, after receiving a communication environment information acquisition instruction from the core network device, can transmit the eighth information to the core network device.

S702, if a communication environment changes, the core network device finds a machine learning model from a plurality of machine learning models according to a third mapping relationship set, the communication environment information on the side of the access network device and the communication environment information on the side of the terminal, to form a second machine learning model set.

For the implementation process of S702, reference may be made to the foregoing embodiments, which will not be described again.

Optionally, the core network device can determine, according to the communication environment information acquired on the side of the terminal and/or the communication environment information acquired on the side of the access network device, whether the communication environment changes, so as to improve the accuracy of the determination with regard to whether the communication environment changes.

When determining whether the communication environment changes, the core network device determines, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determines, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

For a specific process in which the core network device determines whether the communication environment changes, reference may be made to descriptions about the access network device determining, according to the communication environment information acquired on the side of the terminal and/or the communication environment information acquired on the side of the access network device, whether the communication environment changes, and details will not be described again.

S703, the core network device transmits sixth information including the second machine learning model set to the access network device, where the sixth information is used to instruct the access network device to deploy the machine learning model of the second machine learning model set, and/or to instruct the access network device to transmit seventh information to the terminal.

In the present embodiment, if the sixth information instructs the access network device to deploy the machine learning model of the second machine learning model set, execution of S704 is proceeded. If the sixth information instructs the access network device to transmit seventh information to the terminal, then execution of S705 is proceeded. If the sixth information instructs the access network device to deploy the machine learning model of the second machine learning model set and instructs the access network device to transmit seventh information to the terminal, executions of S704 and S705 are proceeded.

S704, the access network device deploys the machine learning model of the second machine learning model set.

S705, the access network device transmits seventh information to the terminal, where the seventh information is used to instruct the terminal to deploy the machine learning model of the second machine learning model set.

S706, the terminal deploys the machine learning model of the second machine learning model set according to the seventh information.

For the implementation process of S703 to S706, reference may be made to the foregoing embodiments, which will not be described again.

In the embodiment of the present application, the core network device receives the eighth information transmitted by the access network device, to obtain the communication environment information on the side of the terminal and the communication environment information on the side of the access network device; and finds the machine learning model(s) suitable for the current communication environment according to the third mapping relationship set, the communication environment information on the side of the terminal and the communication environment information on the side of the access network device; and deploys, on the access network device and/or the terminal, the machine learning model(s) suitable for the current communication environment. In this way, according to a change of a communication environment, the machine learning model(s) deployed on the access network device and/or the terminal can be promptly updated to the machine learning model(s) suitable for the communication environment, thereby improving the update efficiency and effect of the machine learning model(s) deployed in the communication system, and improving the applicability and the model effect of the machine learning model(s) in the communication system, and thus improving the performance of the communication system.

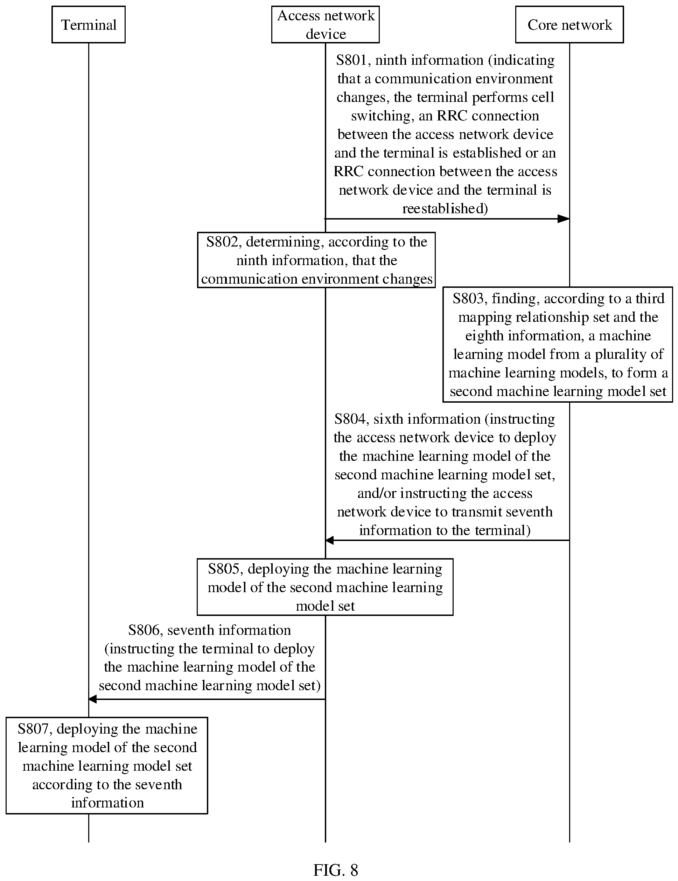

FIG. 8 is a schematic flowchart of a model update method in a communication system according to another embodiment of the present application. As shown in FIG. 8, the method in the present embodiment may include the following.

S801, the access network device transmits ninth information to the core network device.

The ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device.

In one example, the access network device may transmit ninth information to the core network device when fourth information transmitted by the terminal is received and the fourth information indicates that a communication environment on a side of the terminal changes, at this point, the ninth information indicates that the communication environment changes.

In another example, the access network device may transmit ninth information to the core network when it is determined, based on communication environment information on a side of the terminal and/or communication environment information on a side of the access network device, that a communication environment changes, at this point, the ninth information indicates that the communication environment changes.

In another example, the access network device may transmit ninth information to the core network when it is determined that a communication environment changes and identification information of a machine learning model corresponding to a current communication environment cannot be found in a first mapping relationship set, at this point, the ninth information indicates that the communication environment changes.

In another example, the access network device may transmit ninth information to the core network device when it is determined that the terminal performs cell switching, or when a message transmitted by the terminal indicating an RRC connection establishment or a message transmitted by the terminal indicating an RRC connection reestablishment is received, at this point, the ninth information indicates that the communication environment changes, or indicates that the terminal performs cell switching, or an RRC connection between the access network device and the terminal is established, or an RRC connection between the access network device and the terminal is reestablished.

Optionally, the access network device may also transmit ninth information to the core network device when its RRC connection with the terminal is successfully established or its RRC connection with the terminal is successfully reestablished.

S802, the access network device determines, according to the ninth information, that the communication environment changes.

In the present embodiment, when receiving the ninth information, the access network device determines that the communication environment changes.

S803, the core network device finds, according to a third mapping relationship set and the ninth information, a machine learning model from a plurality of machine learning models, to form a second machine learning model set.

In the present embodiment, according to one or more of the following information: communication environment information on a side of the access network device, communication environment information on a side of the terminal and identification information of a machine learning model requested by the access network device, the core network device may find a machine learning model in a third mapping relationship set, to form a second machine learning model set. For example, according to the communication environment information on the side of the access network device and the communication environment information on the side of the terminal, model identification of a machine learning model is found in the third mapping relationship set, and then according to the model identification of the machine learning model, a machine learning model is acquired from a plurality of machine learning models associated with the third mapping relationship, to form a second machine learning model set. For another example, according to the identification information of the machine learning model requested by the access network device, a machine learning model is acquired from a plurality of machine learning models associated with the third mapping relationship, to form a second machine learning model set.

S804, the core network device transmits sixth information including the second machine learning model set to the access network device, where the sixth information is used to instruct the access network device to deploy the machine learning model of the second machine learning model set, and/or to instruct the access network device to transmit seventh information to the terminal.

In the present embodiment, if the sixth information instructs the access network device to deploy the machine learning model of the second machine learning model set, execution of S805 is proceeded. If the sixth information instructs the access network device to transmit seventh information to the terminal, then execution of S806 is proceeded. If the sixth information instructs the access network device to deploy the machine learning model of the second machine learning model set and instructs the access network device to transmit seventh information to the terminal, executions of S805 and S806 are proceeded.

S805, the access network device deploys the machine learning model of the second machine learning model set.

S806, the access network device transmits seventh information to the terminal, where the seventh information is used to instruct the terminal to deploy the machine learning model of the second machine learning model set.

S807, the terminal deploys the machine learning model of the second machine learning model set according to the seventh information.

For the implementation process of S805 to S807, reference may be made to the foregoing embodiments, which will not be described again.

In the embodiment of the present application, the core network device receives the ninth information transmitted by the access network device; finds the machine learning model(s) suitable for the current communication environment according to the third mapping relationship set and the ninth information; and deploys, on the access network device and/or the terminal, the machine learning model(s) suitable for the current communication environment. In this way, according to a change of a communication environment, the machine learning model(s) deployed on the access network device and/or the terminal can be promptly updated to the machine learning model(s) suitable for the communication environment, thereby improving the update efficiency and effect of the machine learning model(s) deployed in the communication system, and improving the applicability and the model effect of the machine learning model(s) in the communication system, and thus improving the performance of the communication system.

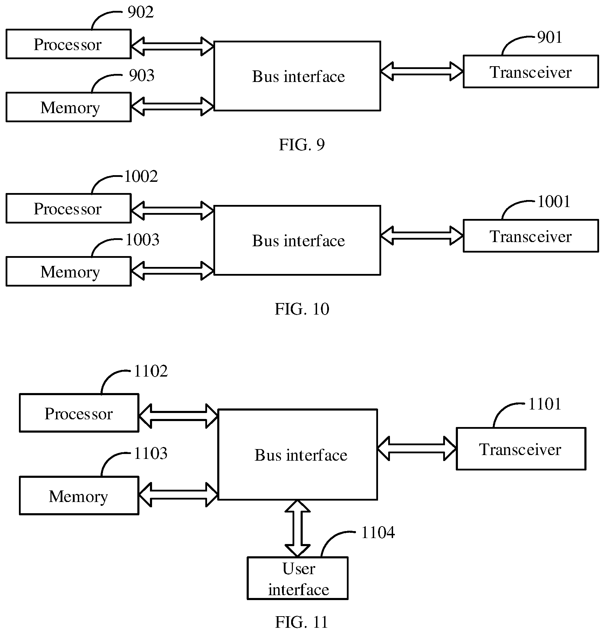

On an access network side, an embodiment of the present application provides a model update apparatus in a communication system, applied to an access network device, where the access network device is configured with a first mapping relationship set and a plurality of machine learning models associated with the first mapping relationship set, the first mapping relationship set includes mapping relationships between plural pieces of communication environment information and the plurality of machine learning models. As shown in FIG. 9, the model update apparatus in the communication system according to the present embodiment can be an access network device, and the model update apparatus in the communication system can include: a transceiver 901, a processor 902, and a memory 903.

The transceiver 901 is configured to receive and transmit data under control of the processor 902.

In FIG. 9, the bus architecture may include any number of interconnected buses and bridges. In particular, various circuits such as one or more processors represented by the processor 902 and a memory represented by the memory 903 are linked together. The bus architecture can also link together a variety of other circuits such as a peripheral device, a voltage regulator and a power management circuit, which are well known in the art and are therefore not described further herein. The bus interface provides an interface. The transceiver 901 may be of a plurality of elements, that is, including a transmitter and a receiver, to provide units communicating with various other devices over transmission media; these transmission media include a wireless channel, a wired channel, an optical cable and other transmission media. The processor 902 is responsible for managing the bus architecture and usual processing, and the memory 903 can store data used when the processor 902 performs an operation.

The processor 902 is responsible for managing the bus architecture and usual processing, and the memory 903 can store data used when the processor 902 performs an operation.

Optionally, the processor 902 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD); and the processor can also adopt a multicore architecture.

The processor 902, by calling a computer program stored in the memory 903, is configured to execute, based on the executable instruction acquired, any method with respect to the access network device according to the embodiments of the present application. The processor and the memory can also be physically separated.

Specifically, the processor 902 is configured to execute operations of:
determining that a communication environment changes, and finding, according to the first mapping relationship set, a machine learning model suitable for a current communication environment from the plurality of machine learning models, to form a first machine learning model set; and deploying the machine learning model of the first machine learning model set on the access network device, and/or transmitting first information to a terminal, where the first information is used to instruct the terminal to deploy the machine learning model of the first machine learning model set.

Optionally, the processor 902 is further configured to execute an operation of:
acquiring communication environment information on a side of the access network device and communication environment information on a side of the terminal;

Further, the finding, according to the first mapping relationship set, the machine learning model suitable for the current communication environment from the plurality of machine learning models, to form the first machine learning model set includes:
finding, according to the first mapping relationship set, the communication environment information on the side of the access network device and the communication environment information on the side of the terminal, the machine learning model from the plurality of machine learning models, to form the first machine learning model set.

Optionally, the acquiring the communication environment information on the side of the terminal includes:
receiving second information transmitted by the terminal, where the second information includes the communication environment information on the side of the terminal; or receiving third information transmitted by the terminal, and acquiring the second information in response to the third information, where the third information is used to instruct the access network device to acquire the second information.

Optionally, the processor 902 is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the processor 902 is further configured to execute operations of:
receiving fourth information transmitted by the terminal, where if the fourth information indicates that a communication environment on a side of the terminal changes, the fourth information includes communication environment information on the side of the terminal and/or identification information of a machine learning model requested by the terminal; determining, according to the fourth information, whether the communication environment changes; and
if the communication environment changes, finding, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

Optionally, the processor 902 is further configured to execute an operation of:
when the terminal performs cell switching, determining that the communication environment changes.

Optionally, the processor 902 is further configured to execute operations of:
receiving fifth information transmitted by a source access network device of the terminal; where the fifth information includes a second mapping relationship set, communication environment information when the terminal communicates with the source access network device, and/or identification information of a machine learning model adopted when the terminal communicates with another access network device, the second mapping relationship set is a subset of mapping relationship associated with the terminal in mapping relationship between plural pieces of communication environment information configured on the source access network device and the plurality of machine learning models; updating the first mapping relationship set according to the fifth information; if the access network device is not configured with all or part of machine learning models associated with the second mapping relationship set, receiving all or part of the machine learning models, transmitted by the source access network device, associated with the second mapping relationship set; and determining, according to all or part of the machine learning models associated with the second mapping relationship set that are received and the plurality of machine learning models associated with the first mapping relationship set before the updating, a plurality of machine learning models associated with the updated first mapping relationship set.

Further, the finding, according to the first mapping relationship set, the machine learning model suitable for the current communication environment from the plurality of machine learning models, to form the first machine learning model set includes:
finding, according to the updated first mapping relationship set, the machine learning model suitable for the current communication environment from the plurality of machine learning models associated with the updated first mapping relationship set, to form the first machine learning model set.

Optionally, the updating the first mapping relationship set includes:
consolidating the second mapping relationship set with the first mapping relationship set to obtain an updated first mapping relationship set.

Optionally, the processor is further configured to execute an operation of:
if a message transmitted by the terminal indicating an RRC connection establishment or a message transmitted by the terminal indicating an RRC connection re-establishment is received, determining that the communication environment changes.

To be noted here, the above-described apparatus provided in the present application can implement all the method steps achieved by the access network device in the foregoing method embodiments, and can achieve the same technical effect. For the same part and beneficial effect as those in the method embodiments, detailed description is omitted here in the present embodiment.

On the core network side, an embodiment of the present application provides a model update apparatus in a communication system, applied to a core network device, where the core network device is preconfigured with a third mapping relationship set and a plurality of machine learning models associated with the third mapping relationship set, the third mapping relationship set includes mapping relationships between plural pieces of communication environment information and the plurality of machine learning models. As shown in FIG. 10, the model update apparatus in the communication system according to the present embodiment can be a core network device, and the model update apparatus in the communication system can include: a transceiver 1001, a processor 1002, and a memory 1003.

In FIG. 10, the bus architecture may include any number of interconnected buses and bridges. In particular, various circuits such as one or more processors represented by the processor 1002 and a memory represented by the memory 1003 are linked together. The bus architecture can also link together a variety of other circuits such as a peripheral device, a voltage regulator and a power management circuit, which are well known in the art and are therefore not described further herein. The bus interface provides an interface. The transceiver 1001 may be of a plurality of elements, that is, including a transmitter and a receiver, to provide units communicating with various other devices over transmission media; these transmission media include a wireless channel, a wired channel, an optical cable and other transmission media. The processor 1002 is responsible for managing the bus architecture and usual processing, and the memory 1003 can store data used when the processor 1002 performs an operation.

The processor 1002 may be a CPU, an ASIC, an FPGA, or a CPLD; and the processor can also adopt a multicore architecture.

The processor 1002, by calling a computer program stored in the memory 1003, is configured to execute, based on the executable instruction acquired, any method with respect to the core network device according to the embodiments of the present application. The processor and the memory can also be physically separated.

Specifically, the processor 1002 is configured to execute operations of:
determining that a communication environment changes, and finding, according to the third mapping relationship set, a machine learning model suitable for a current communication environment from the plurality of machine learning models, to form a second machine learning model set; and transmitting sixth information including the second machine learning model set to an access network device, where the sixth information is used to instruct the access network device to deploy the machine learning model of the second machine learning model set, and/or to instruct the access network device to transmit seventh information to a terminal, where the seventh information is used to instruct the terminal to deploy the machine learning model of the second machine learning model set.

Optionally, the processor 1002 is further configured to execute an operation of:
acquiring communication environment information on a side of the access network device and communication environment information on a side of the terminal.

Further, the finding, according to the third mapping relationship set, the machine learning model suitable for the current communication environment from the plurality of machine learning models, to form the second machine learning model set includes:
finding, according to the third mapping relationship set, the communication environment information on the side of the access network device and the communication environment information on the side of the terminal, the machine learning model from the plurality of machine learning models, to form the second machine learning model set.

Optionally, the acquiring the communication environment information on the side of the access network device and the communication environment information on the side of the terminal includes:
receiving eighth information transmitted by the access network device, where the eighth information includes the communication environment information on the side of the access network device and the communication environment information on the side of the terminal.

Optionally, the processor 1002 is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the processor is further configured to execute an operation of:
receiving ninth information transmitted by the access network device; where the ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device.

Further, the determining that the communication environment changes, and the finding, according to the third mapping relationship set, the machine learning model suitable for the current communication environment from the plurality of machine learning models, to form the second machine learning model set includes:
determining, according to the ninth information, that the communication environment changes; and
finding, according to the third mapping relationship set and the ninth information, the machine learning model from the plurality of machine learning models, to form the second machine learning model set.

Optionally, the processor 1002 is further configured to execute operations of:
receiving first mapping relationship sets transmitted by a plurality of access network devices and a plurality of machine learning models associated with the first mapping relationship sets; and establishing or updating, according to the first mapping relationship sets transmitted by the plurality of access network devices and the plurality of machine learning models associated with the first mapping relationship sets, the third mapping relationship set and the plurality of machine learning models associated with the third mapping relationship set.

To be noted here, the above-described apparatus provided in the present application can implement all the method steps achieved by the core network device in the foregoing method embodiments, and can achieve the same technical effect. For the same part and beneficial effect as those in the method embodiments, detailed description is omitted here in the present embodiment.

On the terminal side, an embodiment of the present application provides a model update apparatus in a communication system, applied to a terminal. As shown in FIG. 11, the model update apparatus in the communication system according to the present embodiment can be a terminal, and the model update apparatus in the communication system can include: a transceiver 1101, a processor 1102, and a memory 1103.

The transceiver 1101 is configured to receive and transmit data under control of the processor 1102.

In FIG. 11, the bus architecture may include any number of interconnected buses and bridges. In particular, various circuits such as one or more processors represented by the processor 1102 and a memory represented by the memory 1103 are linked together. The bus architecture can also link together a variety of other circuits such as a peripheral device, a voltage regulator and a power management circuit, which are well known in the art and are therefore not described further herein. The bus interface provides an interface. The transceiver 1101 may be of a plurality of elements, that is, including a transmitter and a receiver, to provide units communicating with various other devices over transmission media; these transmission media include a wireless channel, a wired channel, an optical cable and other transmission media. The processor 1102 is responsible for managing the bus architecture and usual processing, and the memory 1103 can store data used when the processor 1102 performs an operation. Optionally, the model update apparatus in the communication system can also include a user interface 1104. For different user devices, the user interface 1104 can also be an interface that can be externally or internally connected to a wanted device, and the connected device includes but not limited to a keypad, a monitor, a speaker, a microphone, a joystick, etc.

The processor 1102 is responsible for managing the bus architecture and usual processing, and the memory 1103 can store data used when the processor 1102 performs an operation.

Optionally, the processor 1102 may be a central processing unit (central processing unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD); and the processor can also adopt a multicore architecture.

The processor 1102, by calling a computer program stored in the memory 1103, is configured to execute, based on the executable instruction acquired, any method with respect to the terminal according to the embodiments of the present application. The processor and the memory can also be physically separated.

Specifically, the processor 1102 is configured to execute operations of:
receiving first information or seventh information returned by an access network device, where the first information is used to instruct the terminal to deploy a machine learning model of a first machine learning model set, and the seventh information is used to instruct the terminal to deploy a machine learning model of a second machine learning model set; and deploying the machine learning model of the first machine learning model set according to the first information, or, deploying the machine learning model of the second machine learning model set according to the seventh information.

Optionally, before the receiving the first information or the seventh information returned by the access network device, the processor 1102 is further configured to execute an operation of:
transmitting second information to the access network device, where the second information includes communication environment information on a side of the terminal; or transmitting third information to the access network device, where the third information is used to instruct the access network device to acquire the second information.

Optionally, the processor 1102 is further configured to execute operations of:
determining whether a communication environment on a side of the terminal changes; and transmitting fourth information to the access network device according to whether the communication environment on the side of the terminal changes, where if the fourth information indicates that the communication environment on the side of the terminal changes, the fourth information includes communication environment information on the side of the terminal and/or identification information of a machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, and where the transmitting the fourth information to the access network device according to whether the communication environment on the side of the terminal changes includes:
if it is determined that the communication environment on the side of the terminal changes, determining from the fourth mapping relationship set, according to the communication environment information on the side of the terminal, the identification information of the machine learning model requested by the terminal; and transmitting the fourth information to the access network device, where the fourth information includes the identification information of the machine learning model requested by the terminal.

To be noted here, the above-described apparatus provided in the present application can implement all the method steps achieved by the terminal in the foregoing method embodiments, and can achieve the same technical effect. For the same part and beneficial effect as those in the method embodiments, detailed description is omitted here in the present embodiment.

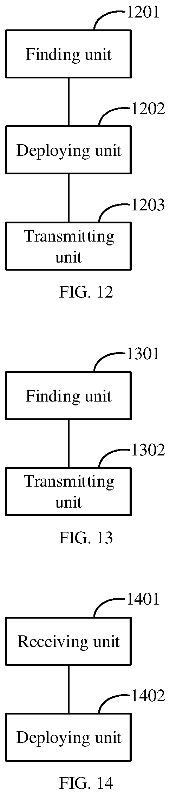

On the access network side, an embodiment of the present application provides a model update apparatus in a communication system, applied to an access network device, where the access network device is configured with a first mapping relationship set and a plurality of machine learning models associated with the first mapping relationship set, the first mapping relationship set includes mapping relationships between plural pieces of communication environment information and the plurality of machine learning models. As shown in FIG. 12, the model update apparatus in the communication system according to the present embodiment can be an access network device; and the model update apparatus in the communication system includes a finding unit 1201, and further includes a deploying unit 1202 and/or a transmitting unit 1203.

The finding unit 1201 is configured to determine that a communication environment changes, and find, according to the first mapping relationship set, a machine learning model suitable for a current communication environment from the plurality of machine learning models, to form a first machine learning model set.

The deploying unit 1202 is configured to deploy the machine learning model of the first machine learning model set on the access network device.

The transmitting unit 1203 is configured to transmit first information to a terminal, where the first information is used to instruct the terminal to deploy the machine learning model of the first machine learning model set.

Optionally, the apparatus further includes:
an acquiring unit, configured to acquire communication environment information on a side of the access network device and communication environment information on a side of the terminal.

The finding unit 1202 is specifically configured to:
find, according to the first mapping relationship set, the communication environment information on the side of the access network device and the communication environment information on the side of the terminal, the machine learning model from the plurality of machine learning models, to form the first machine learning model set.

Optionally, the apparatus further includes a first receiving unit configured to:
receive second information transmitted by the terminal, where the second information includes the communication environment information on the side of the terminal; or receive third information transmitted by the terminal, and acquire the second information in response to the third information, where the third information is used to instruct the access network device to acquire the second information.

Optionally, the apparatus further includes a first determining unit configured to:
determine, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determine, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the apparatus further includes:
a second receiving unit, configured to receive fourth information transmitted by the terminal, where if the fourth information indicates that a communication environment on a side of the terminal changes, the fourth information includes communication environment information on the side of the terminal and/or identification information of a machine learning model requested by the terminal; and
a second determining unit, configured to determine, according to the fourth information, whether the communication environment changes;
where the finding unit 1202 is specifically configured to: if the communication environment changes, find, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

Optionally, the apparatus further includes:
a third determining unit configured to, when the terminal performs cell switching, determine that the communication environment changes.

Optionally, the apparatus further includes:
a third receiving unit configured to receive fifth information transmitted by a source access network device of the terminal;
where the fifth information includes a second mapping relationship set, communication environment information when the terminal communicates with the source access network device, and/or identification information of a machine learning model adopted when the terminal communicates with another access network device, the second mapping relationship set is a subset of mapping relationship associated with the terminal in mapping relationship between plural pieces of communication environment information configured on the source access network device and the plurality of machine learning models;
a first updating unit configured to update the first mapping relationship set according to the fifth information, and determine that the communication environment changes;
a fourth receiving unit configured to, if the access network device is not configured with all or part of machine learning models associated with the second mapping relationship set, receive all or part of the machine learning models, transmitted by the source access network device, associated with the second mapping relationship set; and
a second updating unit configured to determine, according to all or part of the machine learning models associated with the second mapping relationship set that are received and the plurality of machine learning models associated with the first mapping relationship set before the updating, a plurality of machine learning models associated with the updated first mapping relationship set;
where the finding unit 1202 is specifically configured to:
   find, according to the updated first mapping relationship set, the machine learning model suitable for the current communication environment from the plurality of machine learning models associated with the updated first mapping relationship set, to form the first machine learning model set.

Optionally, the first updating unit is specifically configured to consolidate the second mapping relationship set with the first mapping relationship set to obtain an updated first mapping relationship set.

Optionally, the apparatus further includes a fourth determining unit configured to:
if a message transmitted by the terminal indicating an RRC connection establishment or a message transmitted by the terminal indicating an RRC connection re-establishment is received, determine that the communication environment changes.

On the core network side, an embodiment of the present application provides a model update apparatus in a communication system. As shown in FIG. 13, the model update apparatus in the communication system according to the present embodiment can be a core network device; and the model update apparatus in the communication system includes a finding unit 1301 and a transmitting unit 1302.

The finding unit 1301 is configured to determine that a communication environment changes, and find, according to the third mapping relationship set, a machine learning model suitable for a current communication environment from the plurality of machine learning models, to form a second machine learning model set.

The transmitting unit 1302 is configured to transmit sixth information including the second machine learning model set to an access network device, where the sixth information is used to instruct the access network device to deploy the machine learning model of the second machine learning model set, and/or to instruct the access network device to transmit seventh information to a terminal, where the seventh information is used to instruct the terminal to deploy the machine learning model of the second machine learning model set.

Optionally, the apparatus further includes:
an acquiring unit, configured to acquire communication environment information on a side of the access network device and communication environment information on a side of the terminal;
where the finding unit 1301 is specifically configured to:
   find, according to the third mapping relationship set, the communication environment information on the side of the access network device and the communication environment information on the side of the terminal, the machine learning model from the plurality of machine learning models, to form the second machine learning model set.

Optionally, the apparatus further includes:
a first receiving unit, configured to receive eighth information transmitted by the access network device, where the eighth information includes the communication environment information on the side of the access network device and the communication environment information on the side of the terminal.

Optionally, the apparatus further includes a determining unit configured to:
determine, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or, determine, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

Optionally, the apparatus further includes:
a second receiving unit, configured to receive ninth information transmitted by the access network device;
where the ninth information is used to indicate that a communication environment changes, the terminal performs cell switching, an RRC connection between the access network device and the terminal is established or an RRC connection between the access network device and the terminal is reestablished, and where the ninth information includes one or more of the following information: communication environment information on a side of the access network device, communication environment information on a side of the terminal, and identification information of a machine learning model requested by the access network device;
where the finding unit 1301 is specifically configured to:
   determine, according to the ninth information, that the communication environment changes; and
   find, according to the third mapping relationship set and the ninth information, the machine learning model from the plurality of machine learning models, to form the second machine learning model set.

Optionally, the apparatus further includes:
a third receiving unit, configured to receive first mapping relationship sets transmitted by a plurality of access network devices and a plurality of machine learning models associated with the first mapping relationship sets; and
a model processing unit, configured to establish or update, according to the first mapping relationship sets transmitted by the plurality of access network devices and the plurality of machine learning models associated with the first mapping relationship sets, the third mapping relationship set and the plurality of machine learning models associated with the third mapping relationship set.

On the terminal side, an embodiment of the present application provides a model update apparatus in a communication system. As shown in FIG. 14, the model update apparatus in the communication system according to the present embodiment can be a terminal; and the model update apparatus in the communication system includes a receiving unit 1401 and a deploying unit 1402.

The receiving unit 1401 is configured to receive first information or seventh information returned by an access network device, where the first information is used to instruct the terminal to deploy a machine learning model of a first machine learning model set, and the seventh information is used to instruct the terminal to deploy a machine learning model of a second machine learning model set.

The deploying unit 1402 is configured to deploy the machine learning model of the first machine learning model set according to the first information, or, deploy the machine learning model of the second machine learning model set according to the seventh information.

Optionally, the apparatus further includes a first transmitting unit configured to:
transmit second information to the access network device, where the second information includes communication environment information on a side of the terminal; or
transmit third information to the access network device, where the third information is used to instruct the access network device to acquire the second information.

Optionally, the apparatus further includes:
a determining unit, configured to determine whether a communication environment on a side of the terminal changes; and
a second transmitting unit, configured to transmit fourth information to the access network device according to whether the communication environment on the side of the terminal changes, where if the fourth information indicates that the communication environment on the side of the terminal changes, the fourth information includes communication environment information on the side of the terminal and/or identification information of a machine learning model requested by the terminal.

Optionally, a fourth mapping relationship set is configured on the side of the terminal, and the fourth mapping relationship set includes mapping relationships associated with the terminal between plural pieces of communication environment information and a plurality of machine learning models, and where the second transmitting unit is specifically configured to:
if it is determined that the communication environment on the side of the terminal changes, determine from the fourth mapping relationship set, according to the communication environment information on the side of the terminal, the identification information of the machine learning model requested by the terminal; and
transmit the fourth information to the access network device, where the fourth information includes the identification information of the machine learning model requested by the terminal.

To be noted here, the above-described apparatuses provided in the present application can accordingly implement all the method steps achieved by the access network device, the core network device and the terminal in the foregoing method embodiments, and can achieve the same technical effect. For the same part and beneficial effect as those in the method embodiments, detailed description is omitted here in the present embodiments.

It should be noted that the division of the units in the embodiments of the present application is merely exemplary, and is a division of logical functions, moreover, there may be other divisions during actual implementations. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

The above-described integrated unit, if being implemented in a form of a software functional unit and sold or used as an independent product, may be stored in a processor-readable storage medium. Based on such understanding, the technical solutions of the present application essentially, or the part contributing to the prior art, or all or a part of the technical solutions may be embodied in a form of a software product. The computer software product is stored in a storage medium, and includes several instructions for instructing a computer device (which may be a personal computer, a server, or a network device) or a processor (processor) to perform all or a part of the steps of the methods described in the embodiments of the present application. The foregoing storage medium includes: any medium capable of storing program codes, such as a USB flash disk, a mobile hard disk, a read-only memory (Read-Only Memory, ROM), a random access memory (Random Access Memory, RAM), a magnetic disk, or an optical disc.

On the access network side, an embodiment of the present application provides a processor-readable storage medium. The processor-readable storage medium has, stored therein, a computer program enabling the processor to perform any method in connection with the access network device according to the embodiments of the present application, so that the processor can implement all the method steps implemented by the access network device in the foregoing method embodiments and can achieve the same technical effect. For the same part and beneficial effect as those in the method embodiments, detailed description is omitted here in the present embodiment.

On the core network side, an embodiment of the present application provides a processor-readable storage medium. The processor-readable storage medium has, stored therein, a computer program enabling the processor to perform any method in connection with the core network device according to the embodiments of the present application, so that the processor can implement all the method steps implemented by the core network device in the foregoing method embodiments and can achieve the same technical effect. For the same part and beneficial effect as those in the method embodiments, detailed description is omitted here in the present embodiment.

On the terminal side, an embodiment of the present application provides a processor-readable storage medium. The processor-readable storage medium has, stored therein, a computer program enabling the processor to perform any method in connection with the terminal according to the embodiments of the present application, so that the processor can implement all the method steps implemented by the terminal in the foregoing method embodiments and can achieve the same technical effect. For the same part and beneficial effect as those in the method embodiments, detailed description is omitted here in the present embodiment.

The processor-readable storage medium may be any available media or data storage device accessible to the processor, including but not limited to a magnetic memory (such as a floppy disk, a hard disk, a magnetic tape, a magnetic optical disk (MO) or the like), an optical memory (such as a CD, a DVD, a BD, an HVD or the like), and a semiconductor memory (such as a ROM, an EPROM, an EEPROM, a non-volatile memory (NAND FLASH), a solid-state disk (SSD)) and the like.

On the terminal side, an embodiment of the present application further provides a computer program product including instructions. The computer program is stored in a storage medium from which at least one processor can read the computer program, and the at least one processor, when executing the computer program, can implement all the method steps implemented by the terminal in the foregoing method embodiments and can achieve the same technical effect. For the same part and beneficial effect as those in the method embodiments, detailed description is omitted here in the present embodiment.

On the access network device side, an embodiment of the present application further provides a computer program product including instructions. The computer program is stored in a storage medium from which at least one processor can read the computer program, and the at least one processor, when executing the computer program, can implement all the method steps implemented by the access network device in the foregoing method embodiments and can achieve the same technical effect. For the same part and beneficial effect as those in the method embodiments, detailed description is omitted here in the present embodiment.

On the core network device side, an embodiment of the present application further provides a computer program product including instructions. The computer program is stored in a storage medium from which at least one processor can read the computer program, and the at least one processor, when executing the computer program, can implement all the method steps implemented by the core network device in the foregoing method embodiments and can achieve the same technical effect. For the same part and beneficial effect as those in the method embodiments, detailed description is omitted here in the present embodiment.

An embodiment of the present application further provides a communication system, including a core network device, an access network device and a terminal. The core network device is the core network device described in the foregoing apparatus embodiments, which can perform all the method steps performed by the core network device in the foregoing method embodiments, and which can achieve the same technical effect. The access network device is the access network device described in the foregoing apparatus embodiments, which can perform all the method steps performed by the access network device in the foregoing method embodiments, and which can achieve the same technical effect. The terminal is the terminal described in the foregoing apparatus embodiments, which can perform all the method steps performed by the terminal in the foregoing method embodiments, and which can achieve the same technical effect. For the same part and beneficial effect as those in the method embodiments, detailed description is omitted here in the present embodiments.

Those skilled in the art should understand that the embodiments of the present application may be provided as methods, systems, or computer program products. Accordingly, the present application may take the form of complete hardware embodiments, complete software embodiments, or a combination of software and hardware embodiments. Further, the present application may take the form of computer program products implemented on one or more computer-usable storage media (including but not limited to disk memories and optical memories, etc.) containing computer-usable program codes.

The present application is described with reference to flow charts and/or block diagrams of methods, apparatuses and computer program products according to embodiments of the present application. It will be appreciated that computer-executable instructions can implement each flow and/or block in the flow charts and/or the block diagrams, and a combination of a flow and/or a block in the flow charts and/or the block diagrams. These computer-executable instructions may be provided to a processor of a general purpose computer, a special purpose computer, an embedded processor or other programmable data processing devices to generate a machine, so that instructions executed by the processor of the computers or other programmable data processing devices generate a device for performing functions specified in one or more flows of the flow charts and/or one or more blocks of the block diagrams.

These processor-executable instructions may also be stored in a processor-readable memory capable of directing the computers or other programmable data processing devices to operate in a specific manner, so that instructions stored in the processor-readable memory generate a manufactured product including an instruction device, where the instruction device performs functions specified in one or more flows of the flow charts and/or one or more blocks of the block diagrams.

These processor-executable instructions may also be loaded on the computers or other programmable data processing devices, so that a series of operation steps are performed in the computers or other programmable devices to generate a computed implemented process, and thus the instructions executed on the computers or other programmable devices provide steps for performing the functions specified in one or more flows of the flow charts and/or one or more blocks of the block diagrams.

Apparently, those skilled in the art can make various modifications and variations to the present application without departing from the spirit and the scope of the present application. Thus, if these modifications and variations of the present application fall into the scope of the claims of the present application and equivalent technologies thereof, then the present application is also intended to include these modifications and variations.

## Claims

1. A model update method in a communication system, applied to an access network device, wherein the access network device is configured with a first mapping relationship set and a plurality of machine learning models associated with the first mapping relationship set, the first mapping relationship set comprises mapping relationships between plural pieces of communication environment information and the plurality of machine learning models, the method comprises:
determining that a communication environment changes, and finding, according to the first mapping relationship set, a machine learning model suitable for a current communication environment from the plurality of machine learning models, to form a first machine learning model set; and
deploying the machine learning model of the first machine learning model set on the access network device, and/or transmitting first information to a terminal, wherein the first information is used to instruct the terminal to deploy the machine learning model of the first machine learning model set.

2. The method according to claim 1, further comprising:
acquiring communication environment information on a side of the access network device and communication environment information on a side of the terminal;
wherein the finding, according to the first mapping relationship set, the machine learning model suitable for the current communication environment from the plurality of machine learning models, to form the first machine learning model set comprises:
finding, according to the first mapping relationship set, the communication environment information on the side of the access network device and the communication environment information on the side of the terminal, the machine learning model from the plurality of machine learning models, to form the first machine learning model set.

3. The method according to claim 2, wherein the acquiring the communication environment information on the side of the terminal comprises:
receiving second information transmitted by the terminal, wherein the second information comprises the communication environment information on the side of the terminal; or
receiving third information transmitted by the terminal, and acquiring the second information in response to the third information, wherein the third information is used to instruct the access network device to acquire the second information.

4. The method according to claim 2 or 3, further comprising:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

5. The method according to claim 1, further comprising:
receiving fourth information transmitted by the terminal, wherein if the fourth information indicates that a communication environment on a side of the terminal changes, the fourth information comprises communication environment information on the side of the terminal and/or identification information of a machine learning model requested by the terminal;
determining, according to the fourth information, whether the communication environment changes; and
if the communication environment changes, finding, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

6. The method according to claim 1, further comprising:
when the terminal performs cell switching, determining that the communication environment changes.

7. The method according to claim 6, further comprising:
receiving fifth information transmitted by a source access network device of the terminal;
wherein the fifth information comprises a second mapping relationship set, communication environment information when the terminal communicates with the source access network device, and/or identification information of a machine learning model adopted when the terminal communicates with the source access network device, the second mapping relationship set is a subset of mapping relationship associated with the terminal in mapping relationship between plural pieces of communication environment information configured on the source access network device and the plurality of machine learning models;
updating the first mapping relationship set according to the fifth information;
if the access network device is not configured with all or part of machine learning models associated with the second mapping relationship set, receiving all or part of the machine learning models, transmitted by the source access network device, associated with the second mapping relationship set; and
determining, according to all or part of the machine learning models associated with the second mapping relationship set that are received and the plurality of machine learning models associated with the first mapping relationship set before the updating, a plurality of machine learning models associated with the updated first mapping relationship set;
wherein the finding, according to the first mapping relationship set, the machine learning model suitable for the current communication environment from the plurality of machine learning models, to form the first machine learning model set comprises:
finding, according to the updated first mapping relationship set, the machine learning model suitable for the current communication environment from the plurality of machine learning models associated with the updated first mapping relationship set, to form the first machine learning model set.

8. The method according to any one of claims 1 to 3, further comprising:
if a message transmitted by the terminal indicating a radio resource control RRC connection establishment or a message transmitted by the terminal indicating an RRC connection re-establishment is received, determining that the communication environment changes.

9. A model update method in a communication system, applied to a core network device, wherein the core network device is preconfigured with a third mapping relationship set and a plurality of machine learning models associated with the third mapping relationship set, the third mapping relationship set comprises mapping relationships between plural pieces of communication environment information and the plurality of machine learning models, the method comprises:
determining that a communication environment changes, and finding, according to the third mapping relationship set, a machine learning model suitable for a current communication environment from the plurality of machine learning models, to form a second machine learning model set; and
transmitting sixth information comprising the second machine learning model set to an access network device, wherein the sixth information is used to instruct the access network device to deploy the machine learning model of the second machine learning model set, and/or to instruct the access network device to transmit seventh information to a terminal, wherein the seventh information is used to instruct the terminal to deploy the machine learning model of the second machine learning model set.

10. The method according to claim 9, further comprising:
acquiring communication environment information on a side of the access network device and communication environment information on a side of the terminal;
wherein the finding, according to the third mapping relationship set, the machine learning model suitable for the current communication environment from the plurality of machine learning models, to form the second machine learning model set comprises:
finding, according to the third mapping relationship set, the communication environment information on the side of the access network device and the communication environment information on the side of the terminal, the machine learning model from the plurality of machine learning models, to form the second machine learning model set.

11. The method according to claim 10, wherein the acquiring the communication environment information on the side of the access network device and the communication environment information on the side of the terminal comprises:
receiving eighth information transmitted by the access network device, wherein the eighth information comprises the communication environment information on the side of the access network device and the communication environment information on the side of the terminal.

12. The method according to claim 10 or 11, further comprising:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

13. The method according to claim 9, further comprising:
receiving ninth information transmitted by the access network device;
wherein the ninth information is used to indicate that a communication environment changes, the terminal performs cell switching, an RRC connection between the access network device and the terminal is established or an RRC connection between the access network device and the terminal is reestablished, and wherein the ninth information comprises one or more of the following information: communication environment information on a side of the access network device, communication environment information on a side of the terminal, and identification information of a machine learning model requested by the access network device;
wherein the determining that the communication environment changes, and the finding, according to the third mapping relationship set, the machine learning model suitable for the current communication environment from the plurality of machine learning models, to form the second machine learning model set comprises:
determining, according to the ninth information, that the communication environment changes; and
finding, according to the third mapping relationship set and the ninth information, the machine learning model from the plurality of machine learning models, to form the second machine learning model set.

14. The method according to any one of claims 9 to 11, further comprising:
receiving first mapping relationship sets transmitted by a plurality of access network devices and a plurality of machine learning models associated with the first mapping relationship sets; and
establishing or updating, according to the first mapping relationship sets transmitted by the plurality of access network devices and the plurality of machine learning models associated with the first mapping relationship sets, the third mapping relationship set and the plurality of machine learning models associated with the third mapping relationship set.

15. A model update method in a communication system, applied to a terminal, the method comprising:
receiving first information or seventh information returned by an access network device, wherein the first information is used to instruct the terminal to a machine learning model of a first machine learning model set, and the seventh information is used to instruct the terminal to deploy a machine learning model of a second machine learning model set; and
deploying the machine learning model of the first machine learning model set according to the first information, or, deploying the machine learning model of the second machine learning model set according to the seventh information.

16. The method according to claim 15, before the receiving the first information or the seventh information returned by the access network device, further comprising:
transmitting second information to the access network device, wherein the second information comprises communication environment information on a side of the terminal; or
transmitting third information to the access network device, wherein the third information is used to instruct the access network device to acquire the second information.

17. The method according to claim 15 or 16, further comprising:
determining whether a communication environment on a side of the terminal changes; and
transmitting fourth information to the access network device according to whether the communication environment on the side of the terminal changes, wherein if the fourth information indicates that the communication environment on the side of the terminal changes, the fourth information comprises communication environment information on the side of the terminal and/or identification information of a machine learning model requested by the terminal.

18. The method according to claim 17, wherein a fourth mapping relationship set is configured on the side of the terminal, and the fourth mapping relationship set comprises mapping relationships associated with the terminal between plural pieces of communication environment information and a plurality of machine learning models, and wherein the transmitting the fourth information to the access network device according to whether the communication environment on the side of the terminal changes comprises:
if it is determined that the communication environment on the side of the terminal changes, determining from the fourth mapping relationship set, according to the communication environment information on the side of the terminal, the identification information of the machine learning model requested by the terminal; and
transmitting the fourth information to the access network device, wherein the fourth information comprises the identification information of the machine learning model requested by the terminal.

19. A model update apparatus in a communication system, applied to an access network device, wherein the access network device is configured with a first mapping relationship set and a plurality of machine learning models associated with the first mapping relationship set, the first mapping relationship set comprises mapping relationships between plural pieces of communication environment information and the plurality of machine learning models, the apparatus comprises: a memory, a transceiver and a processor;
wherein the memory is configured to store a computer program;
the transceiver is configured to transceive data under control of the processor;
the processor is configured to read the computer program in the memory and execute operations of:
determining that a communication environment changes, and finding, according to the first mapping relationship set, a machine learning model suitable for a current communication environment from the plurality of machine learning models, to form a first machine learning model set; and
deploying the machine learning model of the first machine learning model set on the access network device, and/or transmitting first information to a terminal, wherein the first information is used to instruct the terminal to deploy the machine learning model of the first machine learning model set.

20. The apparatus according to claim 19, wherein the processor is further configured to execute an operation of:
acquiring communication environment information on a side of the access network device and communication environment information on a side of the terminal;
wherein the finding, according to the first mapping relationship set, the machine learning model suitable for the current communication environment from the plurality of machine learning models, to form the first machine learning model set comprises:
finding, according to the first mapping relationship set, the communication environment information on the side of the access network device and the communication environment information on the side of the terminal, the machine learning model from the plurality of machine learning models, to form the first machine learning model set.

21. The apparatus according to claim 20, wherein the acquiring the communication environment information on the side of the terminal comprises:
receiving second information transmitted by the terminal, wherein the second information comprises the communication environment information on the side of the terminal; or
receiving third information transmitted by the terminal, and acquiring the second information in response to the third information, wherein the third information is used to instruct the access network device to acquire the second information.

22. The apparatus according to claim 20 or 21, wherein the processor is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

23. The apparatus according to claim 19, wherein the processor is further configured to execute operations of:
receiving fourth information transmitted by the terminal, wherein if the fourth information indicates that a communication environment on a side of the terminal changes, the fourth information comprises communication environment information on the side of the terminal and/or identification information of a machine learning model requested by the terminal;
determining, according to the fourth information, whether the communication environment changes; and
if the communication environment changes, finding, according to the first mapping relationship set and communication environment information on a side of the access network device, and according to the communication environment information on the side of the terminal and/or the identification information of the machine learning model requested by the terminal, the machine learning model from the plurality of machine learning models, to form the first machine learning model set.

24. The apparatus according to claim 19, wherein the processor is further configured to execute an operation of:
when the terminal performs cell switching, determining that the communication environment changes.

25. The apparatus according to claim 24, wherein the processor is further configured to execute operations of:
receiving fifth information transmitted by a source access network device of the terminal;
wherein the fifth information comprises a second mapping relationship set, communication environment information when the terminal communicates with the source access network device, and/or identification information of a machine learning model adopted when the terminal communicates with the source access network device, the second mapping relationship set is a subset of mapping relationship associated with the terminal in mapping relationship between plural pieces of communication environment information configured on the source access network device and the plurality of machine learning models;
updating the first mapping relationship set according to the fifth information;
if the access network device is not configured with all or part of machine learning models associated with the second mapping relationship set, receiving all or part of the machine learning models, transmitted by the source access network device, associated with the second mapping relationship set; and
determining, according to all or part of the machine learning models associated with the second mapping relationship set that are received and the plurality of machine learning models associated with the first mapping relationship set before the updating, a plurality of machine learning models associated with the updated first mapping relationship set;
wherein the finding, according to the first mapping relationship set, the machine learning model suitable for the current communication environment from the plurality of machine learning models, to form the first machine learning model set comprises:
finding, according to the updated first mapping relationship set, the machine learning model suitable for the current communication environment from the plurality of machine learning models associated with the updated first mapping relationship set, to form the first machine learning model set.

26. The apparatus according to any one of claims 19 to 21, wherein the processor is further configured to execute an operation of:
if a message transmitted by the terminal indicating an RRC connection establishment or a message transmitted by the terminal indicating an RRC connection re-establishment is received, determining that the communication environment changes.

27. A model update apparatus in a communication system, applied to a core network device, wherein the core network device is preconfigured with a third mapping relationship set and a plurality of machine learning models associated with the third mapping relationship set, the third mapping relationship set comprises mapping relationships between plural pieces of communication environment information and the plurality of machine learning models, the apparatus comprises: a memory, a transceiver and a processor;
wherein the memory is configured to store a computer program;
the transceiver is configured to transceive data under control of the processor;
the processor is configured to read the computer program in the memory and execute operations of:
determining that a communication environment changes, and finding, according to the third mapping relationship set, a machine learning model suitable for a current communication environment from the plurality of machine learning models, to form a second machine learning model set; and
transmitting sixth information comprising the second machine learning model set to an access network device, wherein the sixth information is used to instruct the access network device to deploy the machine learning model of the second machine learning model set, and/or to instruct the access network device to transmit seventh information to a terminal, wherein the seventh information is used to instruct the terminal to deploy the machine learning model of the second machine learning model set.

28. The apparatus according to claim 27, wherein the processor is further configured to execute an operation of:
acquiring communication environment information on a side of the access network device and communication environment information on a side of the terminal;
wherein the finding, according to the third mapping relationship set, the machine learning model suitable for the current communication environment from the plurality of machine learning models, to form the second machine learning model set comprises:
finding, according to the third mapping relationship set, the communication environment information on the side of the access network device and the communication environment information on the side of the terminal, the machine learning model from the plurality of machine learning models, to form the second machine learning model set.

29. The apparatus according to claim 28, wherein the acquiring the communication environment information on the side of the access network device and the communication environment information on the side of the terminal comprises:
receiving eighth information transmitted by the access network device, wherein the eighth information comprises the communication environment information on the side of the access network device and the communication environment information on the side of the terminal.

30. The apparatus according to claim 28 or 29, wherein the processor is further configured to execute an operation of:
determining, according to each environmental parameter in communication environment information at a previous time moment on the side of the access network device, each environmental parameter in communication environment information at a current time moment on the side of the access network and mapping relationships between a plurality of environmental parameters and preset thresholds, whether the communication environment changes; and/or,
determining, according to each environmental parameter in communication environment information at a previous time moment on the side of the terminal, each environmental parameter in communication environment information at a current time moment on the side of the terminal and mapping relationships between a plurality of environmental parameters and preset thresholds, whether the communication environment changes.

31. The apparatus according to claim 27, wherein the processor is further configured to execute an operation of:
receiving ninth information transmitted by the access network device;
wherein the ninth information is used to indicate that a communication environment changes, the terminal performs cell switching, an RRC connection between the access network device and the terminal is established or an RRC connection between the access network device and the terminal is reestablished, and wherein the ninth information comprises one or more of the following information: communication environment information on a side of the access network device, communication environment information on a side of the terminal, and identification information of a machine learning model requested by the access network device;
wherein the determining that the communication environment changes, and the finding, according to the third mapping relationship set, the machine learning model suitable for the current communication environment from the plurality of machine learning models, to form the second machine learning model set comprises:
determining, according to the ninth information, that the communication environment changes; and
finding, according to the third mapping relationship set and the ninth information, the machine learning model from the plurality of machine learning models, to form the second machine learning model set.

32. The apparatus according to any one of claims 27 to 29, wherein the processor is further configured to execute operations of:
receiving first mapping relationship sets transmitted by a plurality of access network devices and a plurality of machine learning models associated with the first mapping relationship sets; and
establishing or updating, according to the first mapping relationship sets transmitted by the plurality of access network devices and the plurality of machine learning models associated with the first mapping relationship sets, the third mapping relationship set and the plurality of machine learning models associated with the third mapping relationship set.

33. A model update apparatus in a communication system, applied to a terminal, the apparatus comprising: a memory, a transceiver and a processor;
wherein the memory is configured to store a computer program;
the transceiver is configured to transceive data under control of the processor;
the processor is configured to read the computer program in the memory and execute operations of:
receiving first information or seventh information returned by an access network device, wherein the first information is used to instruct the terminal to deploy a machine learning model of a first machine learning model set or a machine learning model of a second machine learning model set; and
deploying the machine learning model of the first machine learning model set according to the first information, or, deploying the machine learning model of the second machine learning model set according to the seventh information.

34. The apparatus according to claim 33, wherein before the receiving the first information or the seventh information returned by the access network device, the processor is further configured to execute an operation of:
transmitting second information to the access network device, wherein the second information comprises communication environment information on a side of the terminal; or
transmitting third information to the access network device, wherein the third information is used to instruct the access network device to acquire the second information.

35. The apparatus according to claim 33 or 34, wherein the processor is further configured to execute operations of:
determining whether a communication environment on a side of the terminal changes; and
transmitting fourth information to the access network device according to whether the communication environment on the side of the terminal changes, wherein if the fourth information indicates that the communication environment on the side of the terminal changes, the fourth information comprises communication environment information on the side of the terminal and/or identification information of a machine learning model requested by the terminal.

36. The apparatus according to claim 35, wherein a fourth mapping relationship set is configured on the side of the terminal, and the fourth mapping relationship set comprises mapping relationships associated with the terminal between plural pieces of communication environment information and a plurality of machine learning models, and wherein the transmitting the fourth information to the access network device according to whether the communication environment on the side of the terminal changes comprises:
if it is determined that the communication environment on the side of the terminal changes, determining from the fourth mapping relationship set, according to the communication environment information on the side of the terminal, the identification information of the machine learning model requested by the terminal; and
transmitting the fourth information to the access network device, wherein the fourth information is used to at least that the communication environment on the side of the terminal changes, and the fourth information comprises the identification information of the machine learning model requested by the terminal.

37. A model update apparatus in a communication system, applied to an access network device, wherein the access network device is configured with a first mapping relationship set and a plurality of machine learning models associated with the first mapping relationship set, the first mapping relationship set comprises mapping relationships between plural pieces of communication environment information and the plurality of machine learning models, the apparatus comprises:
a finding unit, configured to determine that a communication environment changes, and find, according to the first mapping relationship set, a machine learning model suitable for a current communication environment from the plurality of machine learning models, to form a first machine learning model set; and
a deploying unit, configured to deploy the machine learning model of the first machine learning model set on the access network device, and/or a transmitting unit, configured to transmit first information to a terminal, wherein the first information is used to instruct the terminal to deploy the machine learning model of the first machine learning model set.

38. A model update apparatus in a communication system, applied to a core network device, wherein the core network device is preconfigured with a third mapping relationship set and a plurality of machine learning models associated with the third mapping relationship set, the third mapping relationship set comprises mapping relationships between plural pieces of communication environment information and the plurality of machine learning models, the apparatus comprises:
a finding unit, configured to determine that a communication environment changes, and find, according to the third mapping relationship set, a machine learning model suitable for a current communication environment from the plurality of machine learning models, to form a second machine learning model set; and
a transmitting unit, configured to transmit sixth information comprising the second machine learning model set to an access network device, wherein the sixth information is used to instruct the access network device to deploy the machine learning model of the second machine learning model set, and/or to instruct the access network device to transmit seventh information to a terminal, wherein the seventh information is used to instruct the terminal to deploy the machine learning model of the second machine learning model set.

39. A model update apparatus in a communication system, applied to a terminal, the apparatus comprising:
a receiving unit, configured to receive first information or seventh information returned by an access network device, wherein the first information is used to instruct the terminal to deploy a machine learning model suitable for a current communication environment of a first machine learning model set, and the seventh information is used to instruct the terminal to deploy a machine learning model of a second machine learning model set; and
a deploying unit, configured to deploy the machine learning model of the first machine learning model set according to the first information, or, deploy the machine learning model of the second machine learning model set according to the seventh information.

40. A processor-readable storage medium in which a computer program is stored, wherein the computer program is configured to enable the processor to execute the method according to any one of claims 1 to 8, or the method according to any one of claims 9 to 14, or the method according to any one of claims 15 to 18.
